# EUROPÄISCHE PATENTSCHRIFT

(11) **EP 4 106 508 B1**
(45) Veröffentlichungstag und Bekanntmachung des Hinweises auf die Patenterteilung: **04.03.2026**
(21) Anmeldenummer: 21702969.3
(22) Anmeldetag: 31.01.2021
(51) Int. Cl.: A01F 15/04, A01F 15/08, B30B 9/30

(54) **AUFNAHMEVORRICHTUNG FÜR BALLEN UND AUFNAHMESYSTEM MIT EINER AUFNAHMEVORRICHTUNG**
PICKING-UP DEVICE FOR BALES, AND PICKING-UP SYSTEM COMPRISING A PICKING-UP DEVICE
DISPOSITIF DE RAMASSAGE DE BALLES, ET SYSTÈME DE RAMASSAGE COMPRENANT UN DISPOSITIF DE RAMASSAGE

(30) Priorität: 20.02.2020 DE 102020104524
(43) Veröffentlichungstag der Anmeldung: 28.12.2022
(73) Patentinhaber: Dreher, Ingo, 78582 Balgheim (DE)
(72) Erfinder: Dreher, Ingo, 78582 Balgheim (DE)
(74) Vertreter: DTS Patent- und Rechtsanwälte PartmbB
(86) Internationale Anmeldenummer: PCT/EP2021/052227
(87) Internationale Veröffentlichungsnummer: WO 2021/165022

(56) Entgegenhaltungen:
- EP-A1- 3 556 547
- EP-A1- 3 563 663
- WO-A1-2014/195314
- WO-A1-2016/100223
- WO-A1-2019/165491

## Beschreibung

Die vorliegende Erfindung betrifft eine Aufnahmevorrichtung für durch Kompression eines insbesondere langstängeligen Pflanzengutes gebildete Ballen, wobei die Aufnahmevorrichtung insbesondere für Transportzwecke vorgesehen ist, um die Ballen bei einem Transport von einem Befüllort zu einem Verwertungsort oder einem Lagerort aufzunehmen.

Darüber hinaus betrifft die vorliegende Erfindung ein Aufnahmesystem mit mindestens einer Aufnahmevorrichtung.

Im Hinblick auf eine Verwertung von Pflanzengut als Biomasse ist es von Vorteil, das geerntete Pflanzengut für Transportzwecke und zur Lagerhaltung zu Ballen zu komprimieren. Zu diesem Zweck sind Pressvorrichtungen bekannt, mit denen loses oder vorverdichtetes Pflanzengut in einen Pressraum eingebracht und darin mittels eines Pressorgans zu einem Ballen komprimiert wird. Die so gebildeten Ballen können zu einem Verwertungsort transportiert werden. Als Verwertung kommt insbesondere eine Vergasung des Pflanzengutes unter Freisetzung des Energiegehaltes des Pflanzengutes in Frage. Zu einer derartigen Verwertung können sich unterschiedliche Pflanzen eignen. Hervorzuheben sind allerdings insbesondere Schilfgras (Riesen-Chinaschilf; Miscanthus x giganteus) und Mais. Die vorliegende Erfindung ist jedoch nicht auf den Einsatz der Aufnahmevorrichtung für Ballen aus diesen Pflanzen beschränkt.

Im Hinblick auf eine Unterteilung des geernteten Pflanzengutes in möglichst gleichartige Transport- und Energieeinheiten schlägt die WO 2014/067512 A1 vor, das Pflanzengut zu Ballen mit im Wesentlichen konstanten Volumen und im Wesentlichen konstanter Dichte zu komprimieren. Hierdurch können gewissermaßen handelbare "Energieeinheiten" in Form von Biomasse bereitgestellt werden.

Wünschenswert ist es, Ballen unter möglichst effizienter Ausnutzung bestehender Transportwege und vorteilhafterweise standardisierter Transportvorrichtungen zu transportieren.

Die WO 2014/195314 A1 beschreibt ein landwirtschaftliches Ballensystem mit einer Sammeleinrichtung, einer Ballenkammer, einer Kompressionsvorrichtung und mindestens einem Sensor. Die Sammeleinrichtung ist zum Sammeln von geschnittenem Pflanzengut ausgebildet. Die Ballenkammer ist mit der Sammeleinrichtung gekoppelt, so dass das Pflanzengut in die Ballenkammer geführt werden kann. Die Kompressionsvorrichtung ist mit der Ballenkammer gekoppelt und komprimiert das Pfanzengut in der Ballenkammer periodisch. Der Sensor ist mit der Ballenkammer gekoppelt und stellt ein Signal bereit. Das Signal umfasst Informationen über die Beladung der Kompressionsvorrichtung und/oder die Dichte des Ballens.

Aufgabe der vorliegenden Erfindung ist, eine Aufnahmevorrichtung für Ballen und ein Aufnahmesystem mit einer derartigen Aufnahmevorrichtung bereitzustellen, die bzw. das eine einfache und effiziente Aufnahme von Ballen für Transportzwecke ermöglicht.

Diese Aufgabe wird durch eine erfindungsgemäße Aufnahmevorrichtung mit den Merkmalen von Anspruch 1 gelöst.

Bei der erfindungsgemäßen Aufnahmevorrichtung sind zwei entlang einer Raumrichtung beabstandete, einander gegenüberliegende Seitenteile vorgesehen, deren Abstand voneinander veränderbar ist. Im Befüllzustand können die Ballen in den Aufnahmeraum eingebracht werden. Werden die Seitenteile einander angenähert, können sie den Transportzustand einnehmen, in dem der Aufnahmeraum vorzugsweise vollständig oder im Wesentlichen vollständig befüllt ist. Das Befüllen des Aufnahmeraums erfolgt entlang der zweiten Raumrichtung, die quer und insbesondere senkrecht zur ersten Raumrichtung ausgerichtet ist.

Die Aufnahmeeinheit kann vorzugsweise über eine Hubeinrichtung angehoben und für den Transport auf ein Fahrzeug geladen werden. Hierbei kann es sich zum Beispiel um ein Straßenfahrzeug oder um ein Schienenfahrzeug handeln. Nach dem Transport kann die Aufnahmevorrichtung vom Fahrzeug angehoben und zum Entladen in eine hierfür vorgesehene Position gebracht werden. Das Entladen der Ballen erfolgt vorzugsweise umgekehrt wie das Befüllen, wobei die Seitenteile zunächst in den "Befüllzustand", d. h. in diesem Fall einen für das Entladen vorgesehenen Zustand, überführt und anschließend die Ballen aus dem Aufnahmeraum entnommen werden.

Vorteilhafterweise sind mehrere Verbindungseinheiten vorgesehen, zwischen denen der Aufnahmeraum angeordnet ist und die entlang einer dritten Raumrichtung voneinander beabstandet sind, die quer und insbesondere senkrecht zur ersten Raumrichtung ausgerichtet ist, wobei die Verbindungseinheiten jeweils am ersten Seitenteil und am zweiten Seitenteil angreifen. Bezogen auf die dritte Raumrichtung können Verbindungseinheiten voneinander beabstandet sein und an einander abgewandten Seiten des ersten Seitenteils und des zweiten Seitenteils angreifen. Der Aufnahmeraum ist in der dritten Raumrichtung zwischen den Verbindungseinheiten angeordnet.

Vorzugsweise ist eine Mehrzahl von in der zweiten Raumrichtung voneinander beabstandeten Verbindungseinheiten vorgesehen, wobei zwischen den Verbindungseinheiten jeweils eine Eingriffsöffnung in den Aufnahmeraum gebildet ist.

Für jedes Seitenteil kann vorgesehen sein, dass an einander bezüglich der dritten Raumrichtung abgewandten Seiten jeweils eine Mehrzahl von Verbindungseinheiten angreift.

Vorgesehen sein kann, dass in der dritten Raumrichtung endseitig in der Aufnahmevorrichtung jeweils eine Verbindungseinheit angeordnet ist.

Die dritte Raumrichtung ist vorzugsweise quer und insbesondere senkrecht zur zweiten Raumrichtung ausgerichtet.

Die Einführöffnung ist vorteilhafterweise an einer Endseite der Aufnahmevorrichtung zwischen den Seitenteilen und/oder zwischen den Verbindungseinheiten gebildet. Hierbei erstreckt sich die Einführöffnung vorzugsweise über die gesamte oder im Wesentlichen gesamte Endseite. Dies erleichtert das Einführen von Ballen in den Aufnahmeraum.

Vorteilhaft ist es, wenn die Aufnahmevorrichtung an der Einführöffnung im Transportzustand offen ist. Dadurch kann eine konstruktiv einfache Ausgestaltung der Aufnahmevorrichtung erzielt werden.

Zur Erzielung desselben Vorteils ist es günstig, wenn die Aufnahmevorrichtung der Einführöffnung in Bezug auf die zweite Raumrichtung gegenüberliegend offen ist.

Die Seitenteile sind vorteilhafterweise im Befüllzustand miteinander verbunden, wobei die Verbindungseinheiten längenveränderlich ausgestaltet sind, um das Überführen der Seitenteile vom Transportzustand in den Befüllzustand und umgekehrt zu ermöglichen. Durch Längenveränderung der Verbindungseinheiten kann der Abstand zwischen den Seitenteilen vergrößert werden. Beispielsweise sind die Verbindungseinheiten ausfahrbar, etwa teleskopierbar. Bei einer bevorzugten Ausführungsform können die Verbindungseinheiten beispielsweise unterschiedliche Spannzustände einnehmen. Bei entfallender oder reduzierter Spannung besteht vorzugsweise die Möglichkeit, den Abstand der Seitenteile voneinander zu vergrößern. Umgekehrt kann der Abstand bei erhöhter Spannung verringert werden.

Vorteilhaft ist es, wenn das erste Seitenteil ein Bodenteil der Aufnahmevorrichtung ist und wenn das zweite Seitenteil ein Deckelteil der Aufnahmevorrichtung ist. Über das Bodenteil kann die Aufnahmevorrichtung auf eine Aufstellfläche oder eine Trageinrichtung, beispielsweise eines Fahrzeugs, aufgestellt werden.

Positions- und Orientierungsangaben wie zum Beispiel "Boden" und "Deckel" beziehen sich vorliegend auf einen bestimmungsgemäßen Gebrauch der Aufnahmevorrichtung und des Aufnahmesystems. Dabei ist das Bodenteil in Schwerkraftrichtung unten an der Aufnahmevorrichtung angeordnet und das Deckelteil in Schwerkraftrichtung oben an der Aufnahmevorrichtung angeordnet.

Die erste Raumrichtung kann dementsprechend insbesondere eine Höhenrichtung sein, beispielsweise eine Vertikale. Die zweite und/oder die dritte Raumrichtung können entlang einer Querrichtung verlaufen, zum Beispiel jeweils in einer Horizontalen.

Von Vorteil ist es, wenn das Deckelteil ein plattenförmiges Abdeckelement umfasst oder ausbildet, das den Aufnahmeraum zumindest teilweise und vorzugsweise vollständig überdeckt. Dadurch sind die Ballen im Aufnahmeraum insbesondere vor Regen geschützt.

Die Verbindungseinheiten können vorzugsweise in einer Höhenrichtung der Aufnahmeeinrichtung verlaufen oder ausgerichtet sein.

Als vorteilhaft erweist es sich, wenn das erste Seitenteil und/oder das zweite Seitenteil als Gitterrost ausgebildet ist oder einen solchen umfasst. Hierunter kann vorliegend insbesondere verstanden werden, dass das erste und/oder das zweite Seitenteil einen Rahmen umfasst oder ausbildet, zum Beispiel aus miteinander verbundenen Komponenten wie beispielsweise Profilteilen oder Trägern. Der Gitterrost oder Rahmen ist zum Beispiel aus Metall gefertigt.

Die Ausbildung als Gitterrost oder Rahmen ermöglicht eine konstruktiv besonders einfache Ausgestaltung der Aufnahmevorrichtung bei zugleich geringem Gewicht. Die mit einem Transportfahrzeug mitführbare Nutzlast kann dadurch erhöht werden.

Als vorteilhaft erweist es sich, wenn im Bodenteil Eingriffsöffnungen für eine Transporteinrichtung zum Eingreifen in den Aufnahmeraum gebildet sind. Hierauf wird nachfolgend noch eingegangen. Über die Transporteinrichtung kann der Aufnahmeraum auf einfachere Weise mit Ballen befüllt werden.

Die Aufnahmevorrichtung kann bei einer bevorzugten Ausführungsform als vom Befüllzustand in den Transportzustand in der ersten Raumrichtung aufweitbarer Rahmen ausgebildet sein oder einen solchen Rahmen umfassen.

Im Hinblick auf eine konstruktiv einfache Ausgestaltung ist es von Vorteil, wenn die Aufnahmevorrichtung zwischen den Seitenteilen frei von Seitenwänden ist. Insbesondere kann die Aufnahmevorrichtung wie bereits erwähnt an der Einführöffnung und dieser gegenüberliegend offen sein und im Übrigen in der zweiten Raumrichtung voneinander beabstandete und durch Zwischenräume getrennte Verbindungseinheiten umfassen.

Von Vorteil ist es, wenn die Aufnahmevorrichtung im Aufnahmeraum frei von Zwischenböden und/oder frei von Zwischenwänden ist. Dadurch kann eine konstruktiv einfache Ausgestaltung der Aufnahmevorrichtung erzielt werden. Durch das Einsparen von Zwischenböden und/oder Zwischenwänden kann die von einem Transportfahrzeug mitführbare Nutzlast erhöht werden.

Als günstig erweist es sich, dass die Aufnahmevorrichtung eine Spanneinrichtung umfasst oder ausbildet, unter deren Wirkung in einem Spannzustand das erste Seitenteil und das zweite Seitenteil im Transportzustand relativ zueinander verspannt sind, wobei die Spanneinrichtung in einen Freigabezustand überführbar ist, in dem die Seitenteile zur Einnahme des Befüllzustandes relativ zueinander bewegbar sind. Nimmt die Spanneinrichtung ein Spannzustand ein, sind die Seitenteile, insbesondere zur Einnahme des Transportzustandes, relativ zueinander verspannt. Im Freigabezustand der Spanneinrichtung, gewissermaßen ein "Entspannungszustand" oder Zustand verringerter Spannung, können die Seitenteile zueinander bewegt und insbesondere in größeren Abstand zueinander gebracht werden, um die Befüllstellung einzunehmen.

Durch Vorsehen der Spanneinrichtung besteht die Möglichkeit, die Ballen im Aufnahmeraum zwischen den Seitenteilen und insbesondere mit den Seitenteilen zu fixieren. Eine gesonderte Ladungssicherung der Ballen im Aufnahmeraum kann entfallen. Auf diese Weise kann eine besonders einfache konstruktive Ausgestaltung der Aufnahmevorrichtung erzielt werden.

Dementsprechend ist es von Vorteil, wenn die Ballen im Transportzustand von den Seitenteilen gehalten sind und die Aufnahmevorrichtung frei von einer gesonderten Ladungssicherung für die Ballen ist.

Als günstig erweist es sich, wenn die Verbindungseinheiten jeweils ein Zugelement umfassen, das am ersten Seitenteil und am zweiten Seitenteil angreift, wenn die Aufnahmeeinrichtung mindestens eine Spanneinrichtung zum Spannen des jeweiligen Zugelementes umfasst und wenn das erste Seitenteil und das zweite Seitenteil relativ zueinander unter einer Spannwirkung des Zugelementes gegeneinander verspannbar sind. Das insbesondere formveränderliche Zugelement kann unterschiedliche Spannzustände einnehmen. Hiervon abhängig können die Seitenteile gegeneinander verspannt werden. Die Spannzustände schließen insbesondere einen entspannten oder entspannteren Zustand in dem Sinne ein, dass die Seitenteile voneinander wegbewegt werden können, um sie in den Befüllzustand zu überführen.

Das Zugelement ist beispielsweise ein Seil oder ein Gurt, wobei bei einer bevorzugten Ausführungsform ein Stahlseil vorgesehen ist.

Vorgesehen sein kann, dass das Zugelement mit einem der Seitenteile fest verbunden ist.

Vorteilhafterweise ist mindestens eine Bevorratungseinrichtung für das Zugelement vorgesehen ist, wobei das Zugelement durch Beaufschlagen der Bevorratungseinrichtung spannbar oder entspannbar ist. Insbesondere kann das Zugelement durch Aufwickeln auf die Bevorratungseinrichtung gespannt und durch Abwickeln entspannt werden.

An einem der Seitenteile kann zum Beispiel ein Umlenkelement für das jeweilige Zugelement vorgesehen sein, um dieses in Richtung der Bevorratungseinrichtung umzulenken.

Die Bevorratungseinrichtung ist oder umfasst zum Beispiel eine Trommel, eine Haspel, eine Spindel, eine Spule oder eine Welle, um die das Zugelement gewickelt sein kann. Bei einer bevorzugten Ausführungsform kann zum Beispiel in einem Hohlprofil eines der Seitenteile eine drehbare Welle als Bevorratungseinrichtung vorgesehen sein.

Günstigerweise ist zwei oder mehr Zugelementen mehrerer Verbindungseinheiten eine gemeinsame Bevorratungseinrichtung zugeordnet. Gesonderte Bevorratungseinheiten können dadurch eingespart und die konstruktive Ausgestaltung der Aufnahmevorrichtung vereinfacht werden. Beispielsweise sind mehrere Zugelemente gemeinsam auf eine Trommel oder Welle aufwickelbar.

Es kann eine Antriebseinrichtung für die mindestens eine Bevorratungsvorrichtung vorgesehen sein, beispielsweise zum Drehen einer Trommel oder einer Welle, um das mindestens eine Zugelement aufzuwickeln oder abzuwickeln.

Alternativ oder ergänzend kann ein Spannorgan vorgesehen sein, unter dessen Wirkung das Zugelement auf der Bevorratungsvorrichtung aufwickelbar ist. Mittels des Spannorgans kann die Bevorratungseinrichtung zum Beispiel im Hinblick auf eine Aufwicklung des Zugelementes vorgespannt sein.

Die jeweilige Verbindungseinheit umfasst vorzugsweise an zumindest einem der Seitenteile und vorzugsweise an beiden Seitenteilen ein Führungselement, entlang dem das Zugelement abschnittsweise geführt ist. Es zeigt sich, dass sich dadurch eine zuverlässige Funktion der Verbindungseinheiten sicherstellen lässt.

Das Führungselement ist vorzugsweise an dem Seitenteil angelenkt und relativ zu diesem um eine vorzugsweise in der zweiten Raumrichtung verlaufende Schwenkachse schwenkbar.

Das Führungselement kann zum Beispiel stabförmig oder leistenförmig gebildet sein, wobei das Zugelement vorzugsweise am Führungselement anliegen kann.

Vorgesehen sein kann, dass das Führungselement hülsenförmig ist und dass das Zugelement durch das Führungselement hindurchgeführt ist.

Günstig ist es, wenn das Führungselement von einer ausgeklappten Stellung in eine eingeklappte Stellung überführbar ist, wobei ein freies Ende des Führungselementes in der ausgeklappten Stellung weiter vom Seitenteil entfernt ist als in der eingeklappten Stellung.

Vorgesehen sein kann, dass das Führungselement in einer eingeklappten Stellung in einer vom Seitenteil definierten Ebene angeordnet ist und/oder am Seitenteil anlegbar ist.

Insbesondere kann vorgesehen sein, dass das Führungselement in einer ausgeklappten Stellung in Richtung des jeweils anderen Seitenteils ausgerichtet ist und in eine eingeklappte Stellung überführt werden kann, in der das Führungselement am Seitenteil anliegt und in dessen Ebene angeordnet ist. Dies ermöglicht es zum Beispiel, die Aufnahmevorrichtung wie nachfolgend erläutert zusammenzuklappen.

Die Verbindungseinheit umfasst vorzugsweise ein Rückstellelement, das das Führungselement mit einer auf das Seitenteil gerichteten Kraft beaufschlagt und entgegen dessen Wirkung das Führungselement durch Zug am Zugelement relativ zum Seitenteil verschwenkbar ist.

Das Rückstellelement ist vorteilhafterweise eine Torsionsfeder, die am Seitenteil und am Führungselement angreift und ein die Schwenkachse definierendes Schwenkelement umgibt. Über die Welle ist das Führungselement schwenkbar am Seitenteil gelagert, und die Torsionsfeder kann die Rückstellkraft aufbringen.

Das Rückstellelement kann ein Vorspannelement sein, das das Führungselement in Richtung des Seitenteils vorspannt.

Von Vorteil ist es, wenn die Seitenteile relativ zueinander vom Transportzustand in einen Bevorratungszustand überführbar sind, in dem der Abstand der Seitenteile voneinander entlang der ersten Raumrichtung kleiner ist als im Transportzustand.

Die Seitenteile sind im Bevorratungszustand vorteilhafterweise aneinander anlegbar.

Die Aufnahmevorrichtung kann insbesondere vorteilhafterweise platzsparend zusammengeklappt und flachgelegt bevorratet werden.

Vorgesehen sein kann, dass eine Mehrzahl von Aufnahmevorrichtungen übereinandergestapelt werden kann. Dies erweist sich zum Beispiel für Transportzwecke als vorteilhaft. Verbindungselemente können an den Aufnahmevorrichtungen vorgesehen sein, um übereinanderliegende Aufnahmevorrichtungen miteinander zu verbinden.

Die Aufnahmevorrichtung ist zumindest im Transportzustand der Seitenteile vorzugsweise quaderförmig ausgestaltet.

Günstig ist es, wenn der Aufnahmeraum eine Länge, eine Breite und/oder eine Höhe aufweist, die einem ganzzahligen Vielfachen oder ungefähr oder im Wesentlichen einem ganzzahligen Vielfachen einer Länge des Ballens entspricht. Auf diese Weise besteht die Möglichkeit, den Aufnahmeraum vollständig oder im Wesentlichen vollständig mit Ballen zu füllen.

Bei einer bevorzugten Ausführungsform kann vorgesehen sein, dass in einer Längsrichtung der Aufnahmevorrichtung (beispielsweise der zweiten Raumrichtung) drei Ballen hintereinander im Aufnahmeraum angeordnet sind. In einer Querrichtung (beispielsweise der dritten Raumrichtung) können beispielsweise zwei Ballen nebeneinander im Aufnahmeraum angeordnet sein. In einer Höhenrichtung (beispielsweise der ersten Raumrichtung) können beispielsweise drei Ballen übereinander im Aufnahmeraum angeordnet sein. Im Ergebnis können bevorzugte Ausführungsformen beispielsweise 18 Ballen aufnehmen. Im vorstehend genannten Beispiel weisen die Ballen beispielsweise eine Länge von ungefähr 1960 cm auf, eine Breite von ungefähr 116 cm und eine Höhe von ungefähr 79 cm.

Die Aufnahmevorrichtung weist im Transportzustand der Seitenteile vorzugsweise Abmessungen eines 20-Fuß-Containers oder eines 40-Fuß Containers der Norm ISO 668 auf. Die Innenmaße des 20-Fuß-Containers wurden obigem Bestückungsbeispiel der Aufnahmevorrichtung zugrunde gelegt.

Das erste Seitenteil und/oder das zweite Seitenteil umfasst Verriegelungselemente zum Fixieren der Aufnahmevorrichtung an einer Trageinrichtung. Hierbei handelt es sich insbesondere um Verriegelungselemente, wie sie bei standardisierten Frachtcontainern der Norm ISO 668 vorgesehen sind. Dadurch weist die Aufnahmevorrichtung eine hohe Vielseitigkeit auf und kann mit standardisierten Trageinrichtungen für derartige Container zusammenwirken.

Alternativ oder ergänzend können Verriegelungselemente oder Verbindungselemente vorgesehen sein, um die Aufnahmevorrichtung an einer gleichartig ausgestalteten Aufnahmevorrichtung zu fixieren. Dies kann zum Beispiel beim Stapeln von Aufnahmevorrichtungen wie vorstehend erwähnt von Vorteil sein.

Wie bereits erwähnt, betrifft die vorliegende Erfindung auch ein Aufnahmesystem.

Ein erfindungsgemäßes, die eingangs genannte Aufgabe lösendes Aufnahmesystem für durch Kompression eines insbesondere langstängeligen Pflanzengutes gebildete Ballen umfasst eine Trageinrichtung und mindestens eine Aufnahmevorrichtung der vorstehend genannten Art, die lösbar auf der Trageinrichtung aufstellbar ist.

Die Vorteile, die bereits im Zusammenhang mit der Erläuterung der erfindungsgemäßen Aufnahmevorrichtung erwähnt wurden, können bei dem Aufnahmesystem ebenfalls erzielt werden. Diesbezüglich kann auf die voranstehenden Ausführungen verwiesen werden.

Vorteilhafte Ausführungsformen des erfindungsgemäßen Aufnahmesystems ergeben sich durch vorteilhafte Ausführungsformen der erfindungsgemäßen Aufnahmevorrichtung.

An der Trageinrichtung und am ersten Seitenteil, über das die Aufnahmevorrichtung bevorzugt auf der Trageinrichtung abstellbar ist, können vorzugsweise korrespondierende Verriegelungselemente angeordnet sein, zum lösbaren Verriegeln des Seitenteils an der Trageinrichtung.

An der Trageinrichtung ist vorzugsweise eine Transporteinrichtung angeordnet, die in im Bodenteil gebildete Eingriffsöffnungen eingreift, zum Transport von Ballen im Aufnahmeraum in der zweiten Raumrichtung. Beispielsweise bei Ausgestaltung des Bodenteils als Gitterrost kann die Transporteinrichtung in den Aufnahmeraum eingreifen. Dies erleichtert es, die Ballen in den Aufnahmeraum einzuführen.

Beispielsweise ist oder umfasst die Transporteinrichtung ein Transportband oder Transportrollen.

Die Transporteinrichtung kann angetrieben oder passiv ausgestaltet sein.

Günstig ist es, wenn an der Trageinrichtung der Einführöffnung vorgelagert eine Verschiebeeinrichtung für Ballen angeordnet ist, zum Verschieben der Ballen in der dritten Raumrichtung. Zugeführte Ballen können mittels der Verschiebeeinrichtung in der dritten Raumrichtung verschoben werden, die insbesondere in einer Querrichtung der Aufnahmevorrichtung und senkrecht zur zweiten Raumrichtung ausgerichtet ist, in der die Ballen in den Aufnahmeraum transportiert werden. Zugeführte Ballen können zum Beispiel seitlich nebeneinander mittels der Verschiebeeinrichtung vor der Einführöffnung positioniert werden. Anschließend können nebeneinander positionierte Ballen in der zweiten Raumrichtung in den Aufnahmeraum verschoben werden.

Die Verschiebeeinrichtung umfasst zum Beispiel eine Transportbahn mit einem Transportband oder Transportrollen.

Die Verschiebeeinrichtung kann eine Antriebseinrichtung aufweisen oder passiv ausgestaltet sein.

Von Vorteil ist es, wenn das Aufnahmesystem eine Hubeinrichtung für Ballen umfasst, mit der mindestens ein Ballen anhebbar und auf einen darunter positionierten oder positionierbaren Ballen auflegbar ist. Mittels der Hubeinrichtung können Ballen übereinandergestapelt werden, um den Aufnahmeraum in Höhenrichtung bestmöglich auszunutzen. Beispielsweise wird mindestens ein Ballen angehoben und ein weiterer Ballen unter diesem positioniert, woraufhin der erstgenannte Ballen wieder abgesenkt wird.

Die Hubeinrichtung ist vorzugsweise in der zweiten Raumrichtung hinter der Einführöffnung positioniert, insbesondere bezogen auf die zweite Raumrichtung unmittelbar seitlich neben der Einführöffnung.

Die Hubeinrichtung umfasst günstigerweise Hubelemente, die von einander abgewandten Seiten der Aufnahmevorrichtung in der dritten Raumrichtung in den Aufnahmeraum eingreifen können. Beispielsweise durchgreifen die Hubelemente Eingriffsöffnungen zwischen den Verbindungseinheiten. Zum Anheben der Ballen können die Hubelemente in den Aufnahmeraum eingreifen und in Eingriff mit den Ballen gebracht werden. Nach dem Anheben kann ein weiterer Ballen unter einem angehobenen Ballen positioniert werden. Es besteht insbesondere die Möglichkeit, eine Mehrzahl von Ballen auf diese Weise übereinander zu stapeln.

Die Aufnahmevorrichtung und/oder das Aufnahmesystem kann insbesondere eine Steuereinrichtung zum Ansteuern der betätigbaren Komponenten aufweisen, insbesondere einer Transporteinrichtung, der Verschiebeeinrichtung und/oder der Hubeinrichtung.

Das Aufnahmesystem umfasst vorzugsweise eine Sammeleinrichtung zum Einsammeln der Ballen von einer Bodenfläche. Beispielsweise werden gepresste Ballen von einer Pressvorrichtung auf der Bodenfläche, bei der es sich zum Beispiel um die landwirtschaftliche Nutzfläche handeln kann, hinterlassen. Über die Sammeleinrichtung werden die Ballen eingesammelt und der Aufnahmevorrichtung zugeführt.

Günstig ist es, wenn das Aufnahmesystem ein Fahrzeug umfasst oder ausbildet. Das Fahrzeug kann vorzugsweise auf einer landwirtschaftlichen Nutzfläche verfahren werden. Das Aufnahmesystem kann dadurch mobil eingesetzt und so der Transport der Ballen erleichtert werden.

Das Fahrzeug weist vorteilhafterweise einen Fahrantrieb auf.

Insbesondere kann das Fahrzeug selbstfahrend und selbstlenkend ausgestaltet sein. Landwirtschaftliche Nutzflächen können vom Fahrzeug autonom befahren werden. Darauf hinterlassene Ballen können bevorzugt aufgenommen und in der Aufnahmevorrichtung deponiert werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer bevorzugten Ausführungsform des erfindungsgemäßen Aufnahmesystems, umfassend eine bevorzugte Ausführungsform der erfindungsgemäßen Aufnahmevorrichtung;
- Figur 2:: eine perspektivische schematische Darstellung der Aufnahmevorrichtung aus Figur 1 in einem Befüllzustand;
- Figur 3:: eine Vorderansicht der Aufnahmevorrichtung aus Figur 2 in einem Transportzustand;
- Figur 4:: eine Darstellung entsprechend Figur 4, wobei die Aufnahmevorrichtung im Befüllzustand dargestellt ist;
- Figur 5:: eine Darstellung entsprechend Figur 4, wobei die Aufnahmevorrichtung beim Zusammenklappen dargestellt ist;
- Figur 6:: eine perspektivische Darstellung der Aufnahmevorrichtung beim Zusammenklappen;
- Figur 7:: eine vergrößerte Darstellung gemäß Detail A in Figur 6;
- Figur 8:: eine Schnittansicht längs der Linie 8-8 in Figur 7;
- Figur 9:: eine Draufsicht auf ein Detail der Aufnahmevorrichtung in Richtung des Pfeiles "9" unter Ausblendung einiger Teile;
- Figur 10:: eine schematische Detaildarstellung einer bevorzugten Ausführungsform der erfindungsgemäßen Aufnahmevorrichtung;
- Figur 11:: eine weitere schematische Detaildarstellung einer bevorzugten Ausführungsform der erfindungsgemäßen Aufnahmevorrichtung; und

### Figuren

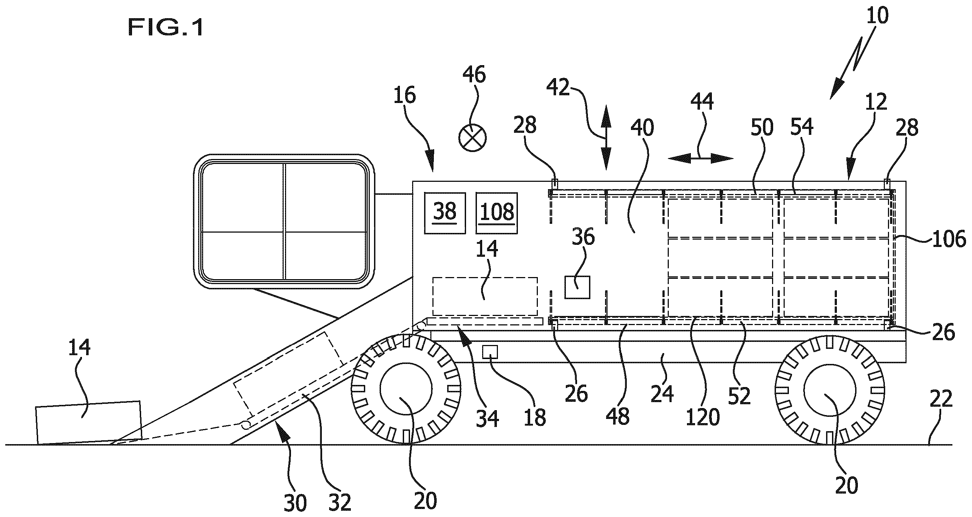

- 12 bis 24:: schematische Teildarstellungen des Aufnahmesystems aus Figur 1, wobei deren Aufnahmevorrichtung, eine Verschiebeeinrichtung und eine Hubeinrichtung beim Befüllen eines Aufnahmeraums der Aufnahmevorrichtung mit Ballen aus Pflanzengut dargestellt sind.

Figur 1 zeigt in schematischer Darstellung ein insgesamt mit dem Bezugszeichen 10 belegtes erfindungsgemäßes Aufnahmesystem in bevorzugter Ausführungsform. Das Aufnahmesystem 10 umfasst eine bevorzugte Ausführungsform der erfindungsgemäßen Aufnahmevorrichtung 12.

Das Aufnahmesystem 10 dient dazu, Ballen 14 aus komprimiertem Pflanzengut aufzunehmen und der Aufnahmevorrichtung 12 zuzuführen. Insbesondere können die Ballen 14 in der Aufnahmevorrichtung 12 auf nachfolgend erläuterte Weise platzsparend gestapelt und darin transportiert werden.

Das Aufnahmesystem 10 umfasst ein Fahrzeug 16 mit einem Fahrantrieb 18 zum Antreiben von Rädern 20. Das Fahrzeug 16 kann auf einer Nutzfläche 22 verfahren werden, auf der die Ballen 14 positioniert sind. Die Nutzfläche 22 ist vorzugsweise eine landwirtschaftliche Nutzfläche, auf der die zu Ballen 14 komprimierten Pflanzen kultiviert werden.

Die Ballen 14 können mittels einer nicht dargestellten Pressvorrichtung aus dem geernteten Pflanzengut durch Kompression bereitgestellt werden. Dabei weisen die Ballen 14 vorzugsweise eine quaderförmige Gestalt mit vordefinierten Abmessungen in der Länge, der Breite und der Höhe auf. Vorzugsweise können die Ballen 14 eine vordefinierte Masse und dementsprechend eine vordefinierte Dichte aufweisen.

Das Fahrzeug 16 umfasst eine Trageinrichtung 24. Die Aufnahmevorrichtung 12 kann lösbar auf die Trageinrichtung 24 abgestellt werden. Verriegelungselemente 26 an der Trageinrichtung 24 und an der Aufnahmevorrichtung 12 können zusammenwirken, um die Aufnahmevorrichtung 12 auf der Trageinrichtung 24 zu fixieren.

Die Aufnahmevorrichtung 12 kann mindestens ein Verbindungselement 28 aufweisen, beispielsweise obenseitig. Am mindestens einen Verbindungselement 28 kann eine in der Zeichnung nicht dargestellte Hubeinrichtung angreifen. Dies gibt die Möglichkeit, die Aufnahmevorrichtung 12 von der Trageinrichtung 24 anzuheben und für den Transport auf einem in der Zeichnung nicht dargestellten Fahrzeug zu platzieren. Das Fahrzeug kann zum Beispiel ein Straßenfahrzeug sein oder ein Schienenfahrzeug, mit dem die aufgenommenen Ballen 14 zu einem Verwertungsort oder Lagerort transportiert werden.

Alternativ ist denkbar, die Ballen 14 mit dem Fahrzeug 16 selbst zum Verwertungsort oder Lagerort zu transportieren.

Das Aufnahmesystem 10 umfasst eine Sammeleinrichtung 30, mit der die Ballen 14 von der Nutzfläche 22 angehoben und über eine Transportbahn 32 zugeführt werden können. In Längsrichtung des Fahrzeugs 16 werden die Ballen 14 zu einer Verschiebeeinrichtung 34 transportiert, mit der die Ballen 14 quer zur Fahrzeugrichtung verschoben werden können. Darüber hinaus umfasst das Aufnahmesystem 10 eine Hubeinrichtung 36 zum Anheben der Ballen 14 vor dem oder nach dem Einführen in die Aufnahmevorrichtung 12.

Auf die Verschiebeeinrichtung 34 und die Hubeinrichtung 36 wird nachfolgend noch eingegangen.

Das Fahrzeug 16 kann von einem Benutzer geführt sein. Alternativ oder ergänzend ist denkbar, dass das Fahrzeug 16 selbstfahrend und selbstlenkend ist. Insbesondere kann neben dem autonomen Verfahren eine autonome Aufnahme der Ballen 14 von der Nutzfläche 22 und ein autonomes Befüllen der Aufnahmevorrichtung 12 vorgesehen sein.

Das Aufnahmesystem 10 umfasst eine Steuereinrichtung 38, von der die betätigbaren Komponenten des Aufnahmesystems 10 angesteuert werden können. Hierzu zählen zum Beispiel der Fahrantrieb 18, die Sammeleinrichtung 30, die Verschiebeeinrichtung 34 und die Hubeinrichtung 36.

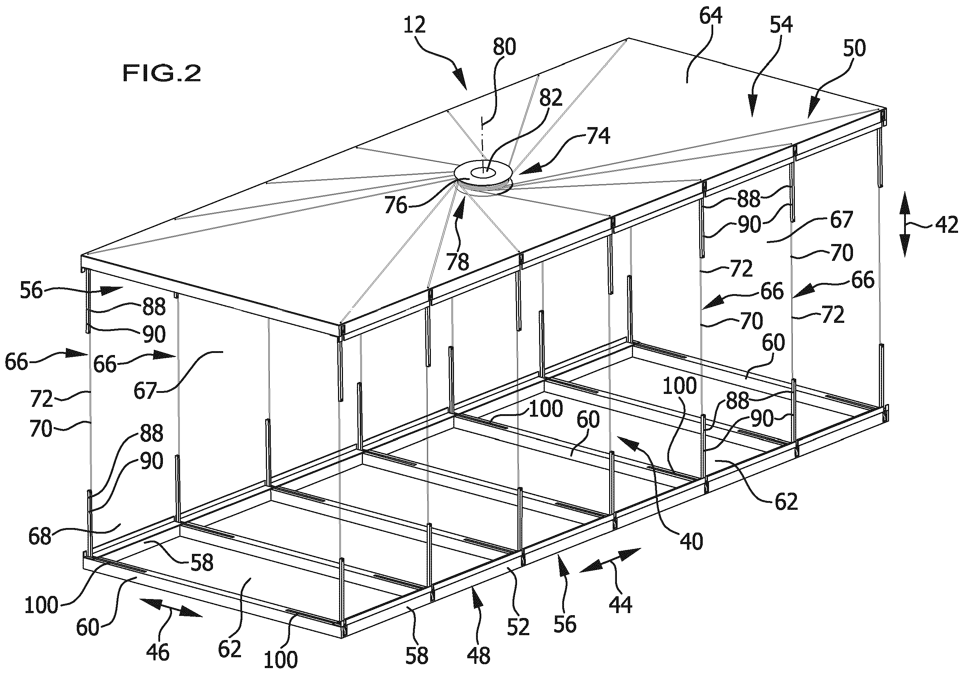

Nachfolgend wird unter Verweis zunächst auf die Figuren 2 bis 9 auf den Aufbau und die Funktionsweise der Aufnahmevorrichtung 12 eingegangen.

Wie zunächst insbesondere aus den Figuren 2 bis 6 hervorgeht, ist die Aufnahmevorrichtung 12 in einem Gebrauchszustand, unter dem nachfolgend insbesondere ein Transportzustand verstanden wird, im Wesentlichen quaderförmig ausgestaltet. Die Aufnahmevorrichtung 12 weist vorzugsweise Abmessungen eines standardisierten Transportcontainers nach ISO 668 auf, insbesondere eines 20-Fuß-Containers. Dies gilt für die Außenmaße der Aufnahmevorrichtung 12, um diese unter Nutzung bestehender Transportfahrzeuge und Transportkapazitäten zu transportieren.

Im Transportzustand der Aufnahmevorrichtung 12 definiert diese einen Aufnahmeraum 40, in dem die Ballen 14 positioniert sind. Günstigerweise entsprechen die Maße des Aufnahmeraums 40 den Innenmaßen eines standardisierten Containers gemäß der Norm ISO 668, insbesondere des bereits erwähnten 20-Fuß-Containers.

Die Aufnahmevorrichtung 12 ist entlang von drei Raumrichtungen erstreckt, nämlich einer ersten Raumrichtung 42, einer zweiten Raumrichtung 44 und einer dritten Raumrichtung 46. Die Raumrichtungen 42, 44, 46 stehen paarweise quer und insbesondere paarweise senkrecht zueinander. Die Raumrichtung 44 entspricht einer Höhenrichtung, insbesondere einer Vertikalen. Die Raumrichtung 44 entspricht einer Längenrichtung, insbesondere einer Horizontalen. Die Raumrichtung 46 entspricht einer Querrichtung, insbesondere einer Horizontalen.

Im bestimmungsgemäßen Gebrauch mit dem Fahrzeug 16 ist die Aufnahmevorrichtung 12 mit der Raumrichtung 44 entlang der Längsrichtung des Fahrzeugs 16 positioniert (Figur 1).

Die Aufnahmevorrichtung 12 umfasst ein erstes Seitenteil 48 und ein zweites Seitenteil 50. Das erste Seitenteil 48 ist insbesondere ein Bodenteil 52 und das zweite Seitenteil 50 ist ein Deckelteil 54.

Positions- und Orientierungsangaben wie "unten", "oben", "Boden" oder "Deckel" sind vorliegend auf einen bestimmungsgemäßen Gebrauch der Aufnahmevorrichtung 12 bezogen. Hierbei liegt das Bodenteil 52 auf der Trageinrichtung 24 auf.

Die Verriegelungselemente 26 sind beispielsweise am Bodenteil 52 angeordnet. Insbesondere können Verriegelungselemente 26 für Container gemäß der Norm ISO 668 vorgesehen sein, wodurch eine Befestigung der Aufnahmevorrichtung 12 auf einem standardisierten Transportfahrzeug ermöglicht wird.

Das Bodenteil 52 ist vorliegend als Gitterrost 56 ausgebildet. Der Gitterrost 56 bildet einen Rahmen aus miteinander verbundenen Profilen.

Die Profile umfassen zwei in Raumrichtung 44 erstreckte Längsprofile 58, die in der Raumrichtung 46 voneinander beabstandet und parallel zueinander ausgerichtet sind. Die Längsprofile 58 sind mittels Querprofilen 60 miteinander verbunden, die entlang der Raumrichtung 46 verlaufen und entlang der Raumrichtung 44 voneinander beabstandet sind.

Vorliegend sind endseitig, bezogen auf die Raumrichtung 44, Querprofile 60 angeordnet. Insgesamt sind sieben Querprofile 60 vorhanden, wobei deren Zahl auch unterschiedlich sein könnte.

Die Querprofile 60 sind äquidistant zueinander positioniert, wobei zwischen benachbarten Querprofilen 60 jeweils eine Eingriffsöffnung 62 im Bodenteil 52 gebildet ist.

Das Deckelteil 54 umfasst ebenfalls einen Gitterrost 56. Dieser ist in der Zeichnung nur teilweise dargestellt. Vorzugsweise sind die Gitterroste 56 identisch oder symmetrisch zueinander ausgestaltet.

Das Deckelteil 54 umfasst vorliegend ein plattenförmiges Abdeckelement 64. Das Abdeckelement 64 ist an der dem Aufnahmeraum 40 abgewandten Seite des Deckelteils 54 angeordnet. Im Aufnahmeraum 40 angeordnete Ballen 14 werden dadurch zum Beispiel vor Regen geschützt.

Im bestimmungsgemäßen Gebrauch sind das Bodenteil 52 und das Deckelteil 54 voneinander entlang der Raumrichtung 42 beabstandet und definieren zwischen sich den Aufnahmeraum 40, in dem Ballen 14 positioniert sind. Dies definiert einen Transportzustand der Seitenteile 48, 50, zugleich einen Transportzustand der Aufnahmevorrichtung 12.

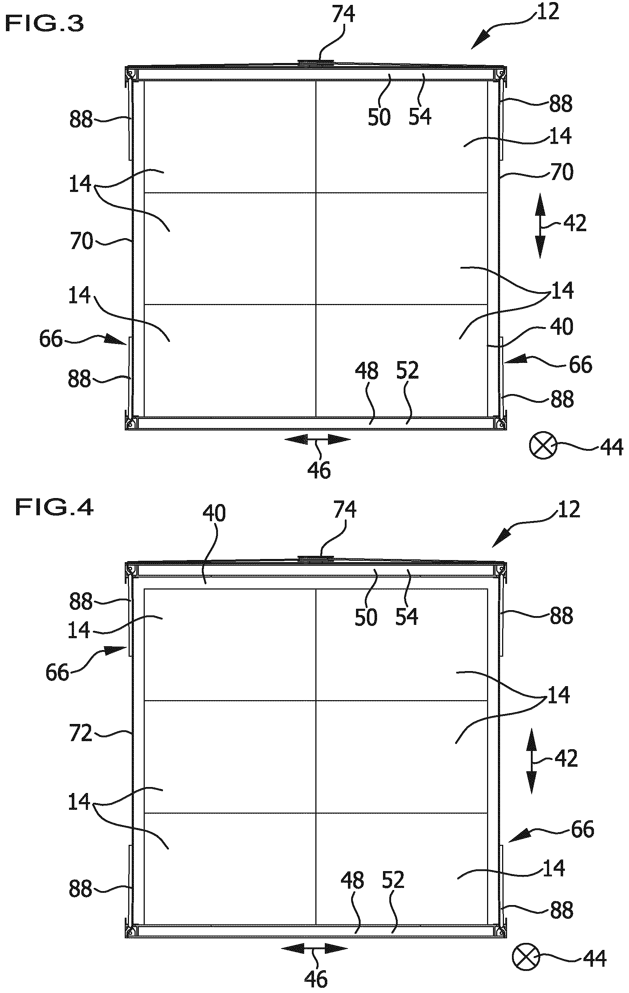

Die Seitenteile 48, 50 sind miteinander über Verbindungseinheiten 66 miteinander verbunden. Die Verbindungseinheiten 66 sind wie nachfolgend erläutert längenveränderlich ausgestaltet. Dies gibt die Möglichkeit, die Seitenteile 48, 50 ausgehend vom Transportzustand in einen Befüllzustand zu überführen. Hierzu können die Seitenteile 48, 50 entlang der ersten Raumrichtung 42 bewegt werden. Im Befüllzustand weisen die Seitenteile 48, 50 einen größeren Abstand voneinander auf als im Transportzustand (Figuren 3 und 4). Im Befüllzustand der Seitenteile 48, 50 ist zugleich ein Befüllzustand der Aufnahmevorrichtung 12.

Vorliegend sind die Verbindungseinheiten 66 im Wesentlichen entlang der ersten Raumrichtung 42 erstreckt, wenn die Seitenteile 48, 50 den Transportzustand und den Befüllzustand einnehmen. An jedem Seitenteil 48, 50 sind mehrere, entlang der Raumrichtung 44 voneinander beabstandete und insbesondere äquidistant zueinander angeordnete Verbindungseinheiten 66 angeordnet. In der Raumrichtung 44 endseitig sind an den Seitenteilen 48, 50 jeweils Verbindungseinheiten 66 angeordnet.

Bezüglich der Raumrichtung 46 sind an jedem Seitenteil 48, 50 Verbindungseinheiten 66 voneinander beabstandet und an den jeweils einander abgewandten Seiten der Seitenteile 48, 50 positioniert.

Die Verbindungseinheiten 66 sind an jedem Seitenteil 48, 50 entlang der Raumrichtung 44 an den Positionen der Querprofile 60 angeordnet. Insgesamt sind sieben Verbindungseinheiten 66 vorgesehen, wobei die Anzahl auch unterschiedlich sein könnte.

Die Verbindungseinheiten 66 sind identisch ausgestaltet.

Zwischen einander benachbarten Verbindungseinheiten 66 sind Eingriffsöffnungen 67 vorhanden. Durch die Eingriffsöffnungen 67 hindurch kann in den Aufnahmeraum 40 eingegriffen werden.

Endseitig bezogen auf die Raumrichtung 44 bildet die Aufnahmevorrichtung 12 eine Einführöffnung 68. Durch die Einführöffnung 68 hindurch können die Ballen 14 in den Aufnahmeraum 40 befördert werden. Die Einführöffnung 68 erstreckt sich in der Raumrichtung 42 zwischen den Seitenteilen 48 und 50 und in der Raumrichtung 46 zwischen den Verbindungseinheiten 66.

Im bestimmungsgemäßen Gebrauch ist die Aufnahmevorrichtung 12 so auf der Trageinrichtung 24 positioniert, dass die Einführöffnung 68 auf dem Fahrzeug 16 nach vorne weist und die Verschiebeeinrichtung 34 vor der Einführöffnung 68 positioniert ist.

An der der Einführöffnung 68 gegenüberliegenden Seite entlang der zweiten Raumrichtung 44 ist die Aufnahmevorrichtung 12 offen.

Die Verbindungseinheiten 66 sind längenveränderlich, um unterschiedliche Relativabstände der Seitenteile 48 und 50 zu ermöglichen. Zu diesem Zweck umfassen die Verbindungseinheiten 66 jeweils ein Zugelement 70, das vorliegend ausgestaltet ist als Seil 72, insbesondere ein Stahlseil 72.

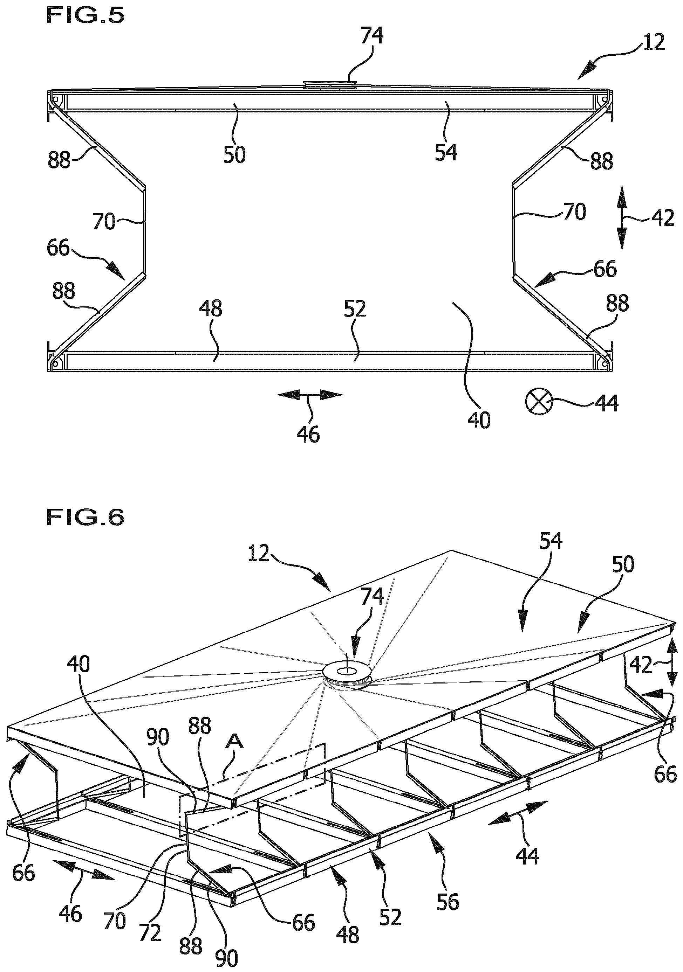

Den Zugelementen 70 ist eine Bevorratungseinrichtung 74 zugeordnet. Vorliegend kommt eine Bevorratungseinrichtung 74 ausgestaltet als Trommel 76 zur Bevorratung aller Seile 72 zum Einsatz (Figuren 2 und 6). Die Seile 72 können auf die Trommel 76 aufgewickelt werden. Dadurch können die Seile 72 gespannt werden. Umgekehrt könnend die Seile 72 von der Trommel 76 abgewickelt werden. Dadurch können die Seile 72 in einen entspannteren Zustand überführt werden, d. h. weniger gespannt sein.

Die Bevorratungseinrichtung 74 kann als Spanneinrichtung 78 der Aufnahmevorrichtung 12 oder als ein Teil einer derartigen Spanneinrichtung 78 (insbesondere in Kombination mit den Zugelementen 70) angesehen werden. In einem Spannzustand können die Seile 72 gespannt und die Seitenteile 48, 50 relativ zueinander verspannt werden. In einem Freigabezustand können die Seile 72 unter geringere Spannung oder in einen spannungsfreien Zustand gesetzt werden, um die Seitenteile 48, 50 relativ zueinander zu bewegen.

Im vorliegenden Beispiel ist die Trommel 76 auf dem Abdeckelement 64 angeordnet und um eine entlang der Raumrichtung 42 ausgerichtete Achse 80 drehbar. Eine Antriebseinrichtung 82 kann vorgesehen sein, um die Trommel 76 zum Aufwickeln und zum Abwickeln der Seile 72 zu drehen.

Vorzugsweise ist dabei eine Flachbauweise vorgesehen, um den Überstand in der Raumrichtung 42 möglichst gering zu halten. Alternativ kann zum Beispiel eine Montage der Trommel 76 unterhalb des Abdeckelementes 64 von Vorteil sein.

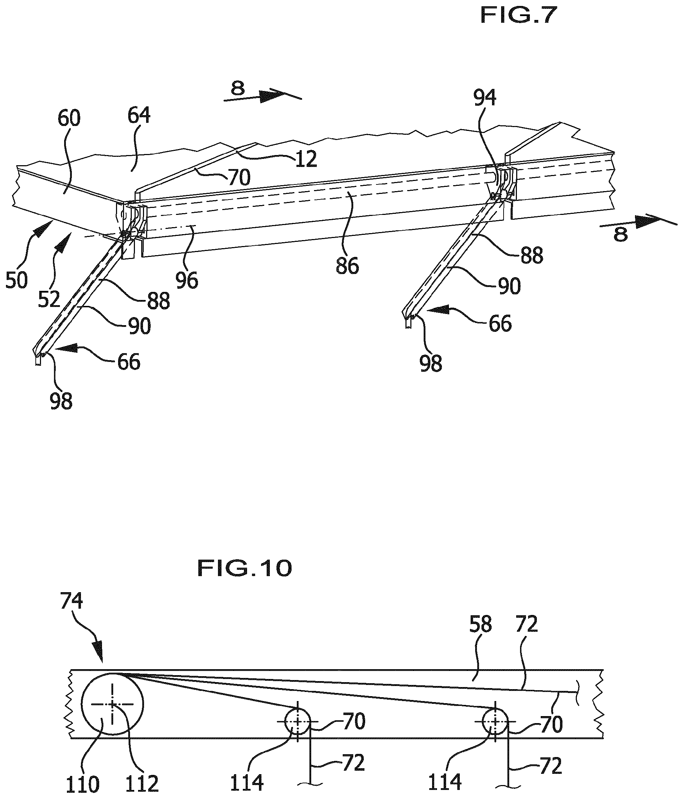

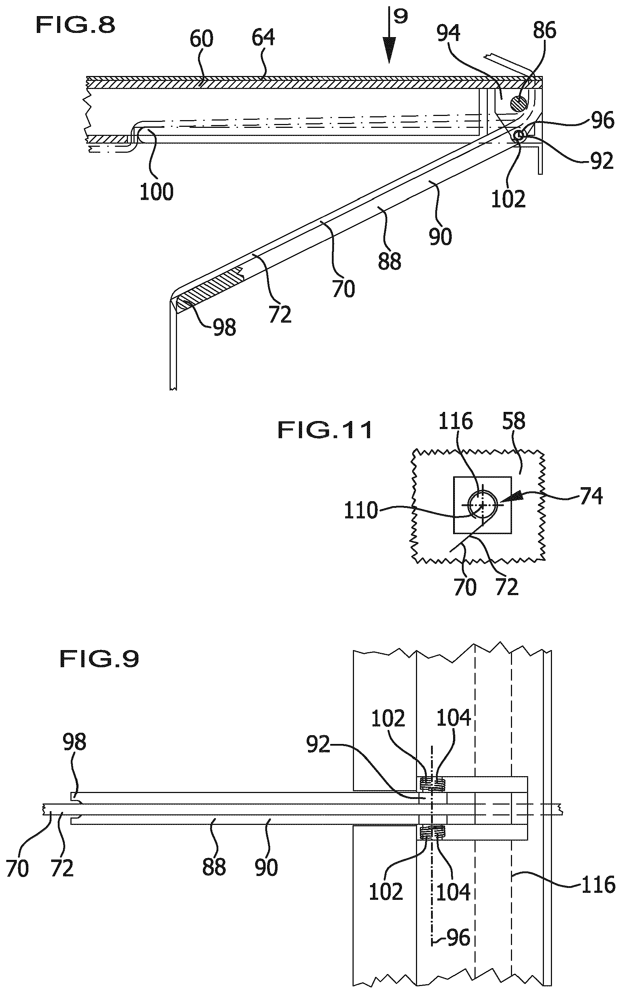

Ein jeweiliges Seil 72 ist mit einem Ende am Bodenteil 52 fixiert. Das Seil 72 erstreckt sich in Richtung des Deckelteils 54. Am Deckelteil 54 ist ein Umlenkelement 84 vorgesehen, zum Umlenken des Seiles 72 in Richtung der Trommel 76. Das Umlenkelement 84 ist zum Beispiel eine entlang des Längsprofils 58 erstreckte Welle 86 (Figuren 7 und 8).

Die Trommel 76 ist zentral auf dem Abdeckelement 64 angeordnet, sodass die Seile 72 tangentiell auf die Trommel 76 zulaufen.

Die jeweilige Verbindungseinheit 66 umfasst mindestens ein und vorzugsweise zwei Führungselemente 88 zum Führen des jeweiligen Seils 72. Führungselemente 88 sind am Bodenteil 52 und am Deckelteil 54 angeordnet und von identischer Konstruktion.

Das Führungselement 88 ist als Leiste 90 ausgestaltet. Die Leiste 90 ist mit einem festen Ende an einem Schwenkelement 92 schwenkbar gelagert. Das Schwenkelement 92 ist seinerseits über ein Halteteil 94 am Längsprofil 58 gehalten.

Das Schwenkelement 92 definiert eine vorliegend in Richtung des Längsprofils 58 verlaufende Schwenkachse 96. Dies erlaubt es, die Leiste 90 relativ zum Bodenteil 52 oder Deckelteil 54 um die Schwenkachse 96 zu verschwenken. Ein freies Ende 98 kann dabei relativ zum jeweiligen Seitenteil 48, 50 eine ausgeklappte Stellung einnehmen. Dabei weist die Leiste 90 weg vom Seitenteil 48, 50 in Richtung des jeweils anderen Seitenteils 50, 48.

Durch Verschwenken um die Schwenkachse 96 kann die Leiste 90 eine eingeklappte Stellung einnehmen. In der eingeklappten Stellung ist der Abstand des freien Endes 90 vom Seitenteil 48 oder 50 geringer als in der ausgeklappten Stellung.

In der eingeklappten Stellung kann die Leiste 90 in eine Ausnehmung 100 eingreifen, die am jeweiligen Querprofil 60 gebildet ist, und ist in der Ebene des Seitenteils 48, 50 angeordnet.

Die Leiste 90 kann entgegen der Wirkung mindestens eines Rückstellelementes 102 ausgeklappt werden, das die Leiste 90 mit einer auf das jeweilige Seitenteil 48, 50 gerichteten Kraft beaufschlagt. Vorliegend sind zwei Rückstellelemente 102 in Gestalt von Torsionsfedern 104 vorgesehen. Die Torsionsfedern 104 umgeben das Schwenkelement 92 und greifen am Längsprofil 58 und an der Leiste 90 an.

Das Rückstellelement 102 kann insbesondere ein Vorspannelement sein, das die Leiste 90 mit einer auf das Seitenteil 48, 50 gerichteten Vorspannkraft beaufschlagt.

An beiden Seitenteilen 48, 50 ist das Seil 72 so geführt, dass es anliegend am Führungselement 88 dem Aufnahmeraum 40 zugewandt verläuft (Figuren 3 bis 8).

In dem bereits erwähnten Transportzustand sind das Bodenteil 52 und das Deckelteil 54 entlang der Raumrichtung 42 voneinander beabstandet. Ballen 14 sind im Aufnahmeraum 40 angeordnet.

Über die Spanneinrichtung 78 in einem Spannzustand sind das Bodenteil 52 und das Deckelteil 54 relativ zueinander so verspannt, dass die Ballen 14 im Aufnahmeraum 40 fixiert sind. Dabei liegen die Ballen 14 auf den Querprofilen 60 des Bodenteils 52 auf. Von oben liegen die Querprofile 60 des Deckelteils 54 auf den Ballen 14 auf (Figur 3).

Die Seile 72 sind gespannt, so dass das Bodenteil 52 und das Deckelteil 54 gegeneinander und gegen die Ballen 14 verspannt sind. Eine gesonderte Ladungssicherung für die Ballen 14 ist insbesondere nicht erforderlich.

Zum erleichterten Befüllen, und in entsprechender Weise zum Entladen, des Aufnahmeraums 40 können das Bodenteil 52 und das Deckelteil 54 relativ zueinander in einen Befüllzustand überführt werden (Figur 4). Zu diesem Zweck kann die Spannung der Seile 72 mittels der Spanneinrichtung 78 verringert werden, insbesondere durch Abwickeln von Seilen 72 von der Trommel 76. Dies erlaubt es, das Bodenteil 52 und das Deckelteil 54 relativ zueinander zu bewegen.

Die Relativbewegung des Bodenteils 52 und des Deckelteils 54 kann auf unterschiedliche Weise erfolgen. Beispielsweise kann an der Aufnahmevorrichtung 12 selbst oder als Bestandteil des Aufnahmesystems 10, zum Beispiel am Fahrzeug 16, eine Stützeinrichtung vorgesehen sein. Figur 1 zeigt schematisch eine mit dem Bezugszeichen 106 belegte Stützeinrichtung. Die Stützeinrichtung 106 erlaubt zum Beispiel das Anheben des Deckelteils 54, so dass der Aufnahmeraum 40 aufgeweitet wird und die Ballen 14 auf einfachere Weise eingeführt oder entnommen werden können.

Alternativ kann das Aufnahmesystem 10, zum Beispiel am Fahrzeug 16, eine Hubeinrichtung aufweisen. Die Hubeinrichtung ist in Figur 1 schematisch mit dem Bezugszeichen 108 dargestellt. Beispielsweise kann die Hubeinrichtung 108 kranartig ausgestaltet sein. Vorgesehen sein kann, dass die Hubeinrichtung 108 zum Beispiel an den Verbindungselementen 28 angreift.

Zum Fixieren der Ballen 14 wird das Deckelteil 54 wieder freigegeben und dem Bodenteil 52 angenähert, und die Spanneinrichtung 78 wird in den Spannzustand überführt.

Wie insbesondere aus den Figuren 5 und 6 hervorgeht, können das Bodenteil 52 und das Deckelteil 54 relativ zueinander in einen platzsparenden Bevorratungszustand überführt werden. Insbesondere bei entleertem Aufnahmeraum 40 kann das Deckelteil 54 in Richtung des Bodenteils 52 abgesenkt werden. Hierzu kann zum Beispiel eine Stützeinrichtung oder eine Hubeinrichtung vorgesehen sein. Die Führungselemente 88 klappen vom ausgeklappten in den eingeklappten Zustand, indem sie an den Längsprofilen 58 verschwenken. Das Seil 72 liegt an den Führungselementen 88 an und wird dadurch weg von den Rändern der Aufnahmevorrichtung 12 geführt, in den sich verkleinernden Aufnahmeraum 40 hinein. Über die Trommel 76 kann die Seillänge so kontrolliert werden, dass die Aufnahmevorrichtung 12 geordnet einklappt und das Seil 72 nicht durchhängt.

Es besteht die Möglichkeit, das Bodenteil 52 und das Deckelteil 54 aneinander anzulegen. Dies ist in der Zeichnung nicht dargestellt, in diesem Fall greifen die Führungselemente 88 in die Ausnehmung 100 ein.

Vorzugsweise kann eine Mehrzahl von so im Bevorratungszustand zusammengeklappten Aufnahmevorrichtungen 12 übereinandergestapelt werden. Denkbar ist zum Beispiel eine Verbindung übereinanderliegender Aufnahmevorrichtungen 12, zum Beispiel über die Verriegelungselemente 26 und die Verbindungselemente 28.

Insgesamt bildet die Aufnahmevorrichtung 12 einen zum Befüllen und Entladen aufweitbaren Rahmen, der bevorzugt für die platzsparende Bevorratung zusammengeklappt werden kann.

Figur 10 zeigt in schematischer Darstellung eine Teilansicht eines Längsprofils 58 mit einer Trommel 110, die zum Beispiel als Ersatz für die Trommel 76 als Bestandteil der Bevorratungseinrichtung 74 zum Einsatz kommen könnte. Die Trommel 110 ist zum Beispiel um eine in der Raumrichtung 46 verlaufende Achse 112 drehbar und bevorzugt am Deckelteil 54 angebracht. Die Seile 72 an einer Längsseite der Aufnahmevorrichtung 10 sind vorzugsweise über nur eine Trommel 110 aufwickelbar. Ein jeweils beispielsweise rollenförmiges Umlenkelement 114 lenkt das Seil 72 in Richtung des jeweils anderen Seitenteils 48, 50.

Figur 11 zeigt in schematischer Darstellung eine andersartige Form der Bevorratungseinrichtung 74. Dabei ist ein jeweiliges Seil 72 zum Beispiel auf eine Welle 116 als Ersatz für die Trommel 76 wickelbar. Die Welle 116 ist bevorzugt im Längsprofil 58 angeordnet und um eine in der Raumrichtung 44 ausgerichtete Achse 112 drehbar. Dies erlaubt eine besonders kompakte Bauform der Bevorratungseinrichtung 74.

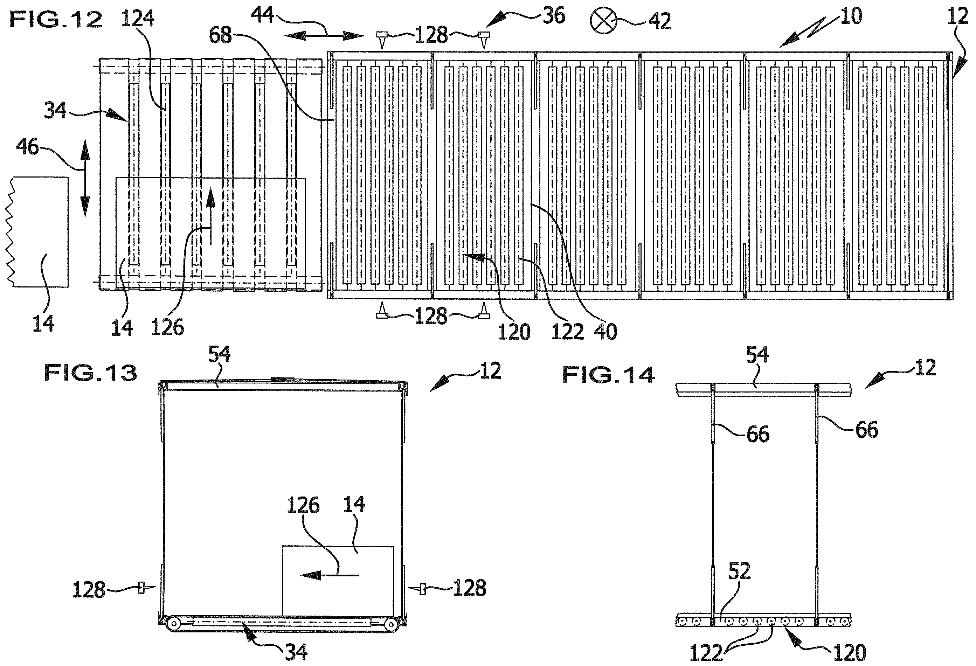

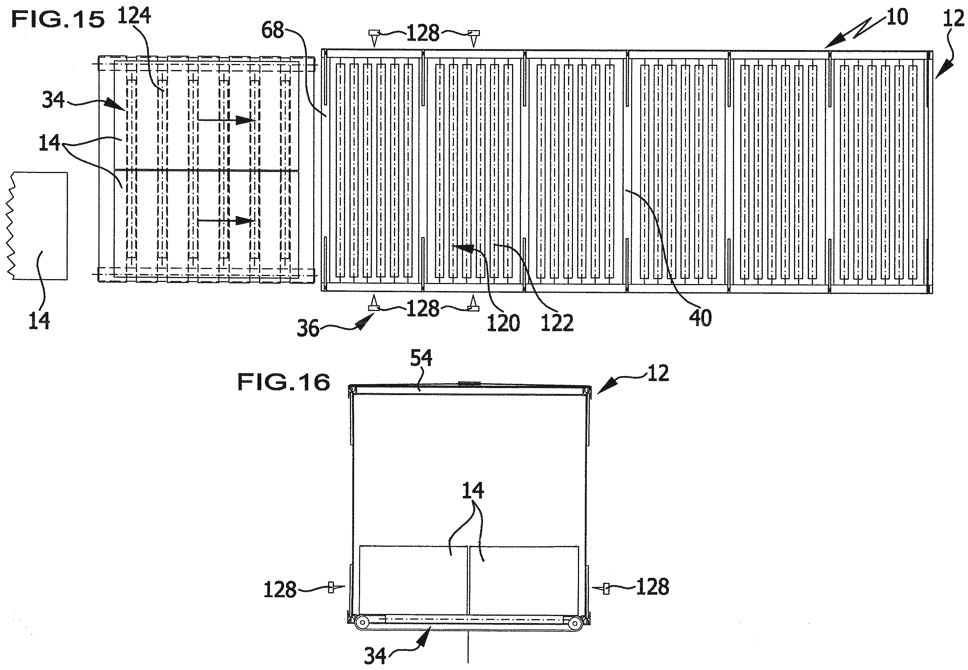

Nachfolgend wird auf ein anhand der Figuren 12 bis 24 erläutertes Verfahren zum Befüllen der Aufnahmevorrichtung 12 mit den Ballen 14 eingegangen, wobei das Befüllen auf dem Fahrzeug 16 vorgenommen wird. Dabei zeigen die Figuren 12, 15, 17, 19, 21 und 22 die Aufnahmevorrichtung 12, die Verschiebeeinrichtung 34 und die Hubeinrichtung 36 von oben ohne das Deckelteil 54. Die Figuren 13, 16, 18, 20, 22 und 24 zeigen eine Ansicht der Verschiebeeinrichtung 34 und der dahinter angeordneten Aufnahmevorrichtung 12 oder nur der Aufnahmeeinrichtung 12 von vorne. Die Figur 14 zeigt eine Seitenansicht der Aufnahmevorrichtung 12.

Die Zeichnungsblätter 7/12 bis 12/12 stellen jeweils für sich unterschiedliche Befüllschritte dar.

Die Aufnahmevorrichtung 12 nimmt den Befüllzustand ein.

Das Aufnahmesystem 10 umfasst auf der Trageinrichtung 24 eine Transporteinrichtung 120. Die Transporteinrichtung 120 umfasst im vorliegenden Fall Transportrollen 122. Die Transportrollen 122 können, wenn das Bodenteil 52 auf der Trageinrichtung 24 aufliegt, durch die Eingriffsöffnungen 62 hindurch in den Aufnahmeraum 40 eingreifen. Die Transportrollen 122 sind um in der Raumrichtung 46 verlaufende Achsen drehbar. Dies erlaubt es, die Ballen 14 über die Transportrollen 122 handhabungsfreundlich einfach im Aufnahmeraum 40 zu bewegen.

Die Verschiebeeinrichtung 34 umfasst eine Transportbahn 124. Über die Transportbahn 124 können die Ballen 14 der Einführöffnung 68 vorgelagert in der Raumrichtung 46 verschoben werden (Pfeil 126).

Die Hubeinrichtung 36 ist vorliegend der Einführöffnung 68 in der Raumrichtung 44 unmittelbar benachbart positioniert. Die Hubeinrichtung 36 umfasst Hubelemente 128, die voneinander gegenüberliegenden Seiten in der Raumrichtung 46 durch die Eingriffsöffnungen 67 in den Aufnahmeraum 40 eingreifen und dadurch mit den Ballen 14 in Eingriff gebracht werden können. Die Hubelemente 128 können angehoben werden. Vorliegend sind zum Beispiel an jeder Seite der Aufnahmevorrichtung 12 in der Raumrichtung 44 zwei voneinander beabstandete Hubelemente 128 vorgesehen.

Zunächst kann ein zugeführter Ballen 14 mittels der Verschiebeeinrichtung 34 so in Pfeilrichtung 126 verschoben werden, dass ein nachfolgend zugeführter Ballen 14 unmittelbar neben dem ersten Ballen 14 angeordnet und beide Ballen 14 direkt vor der Einführöffnung 68 positioniert sind (Figuren 12, 13, 15 und 16).

Anschließend werden die beiden ersten Ballen 14 durch die Einführöffnung 68 hindurch in den Aufnahmeraum 40 verschoben. Dies kann vorzugsweise mittels der Verschiebeeinrichtung 34 oder einer gesonderten Transporteinrichtung erfolgen.

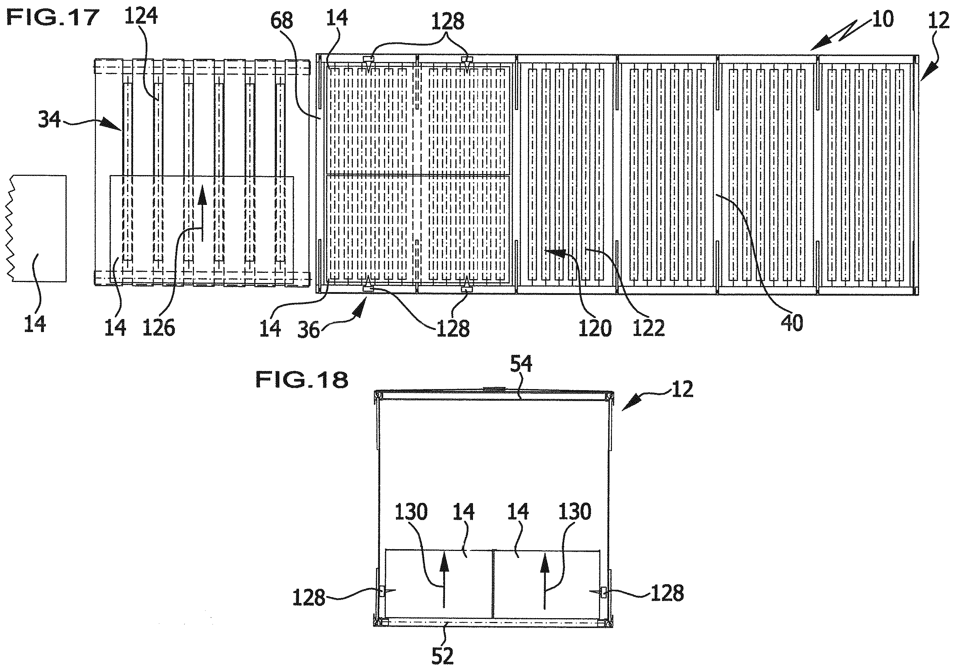

Die Ballen 14 werden so weit verschoben, bis sie vorne im Aufnahmeraum 40 zwischen den Hubelementen 128 positioniert sind. Die Ballen 14 können mittels der Hubelemente 128 angehoben werden (Figuren 17 und 18; Pfeil 130).

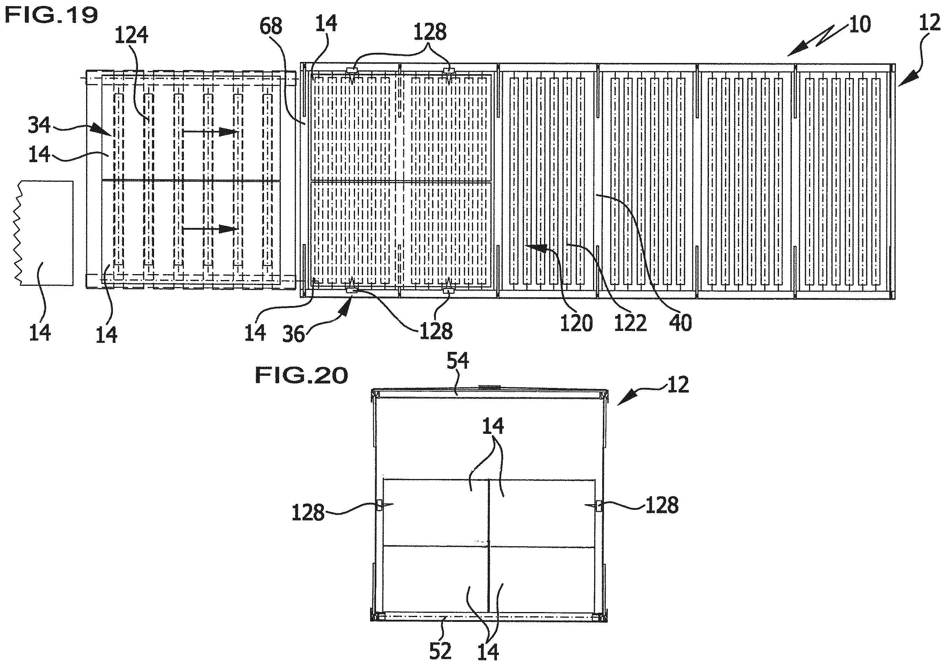

Vorzugsweise gleichzeitig zum Anheben können weitere Ballen 14 zugeführt, seitlich nebeneinander positioniert und vor der Einführöffnung 68 angeordnet werden (Figur 19). Diese neu zugeführten Ballen 14 können unter die angehobenen Ballen 14 in den Aufnahmeraum 40 verschoben werden (Figur 20).

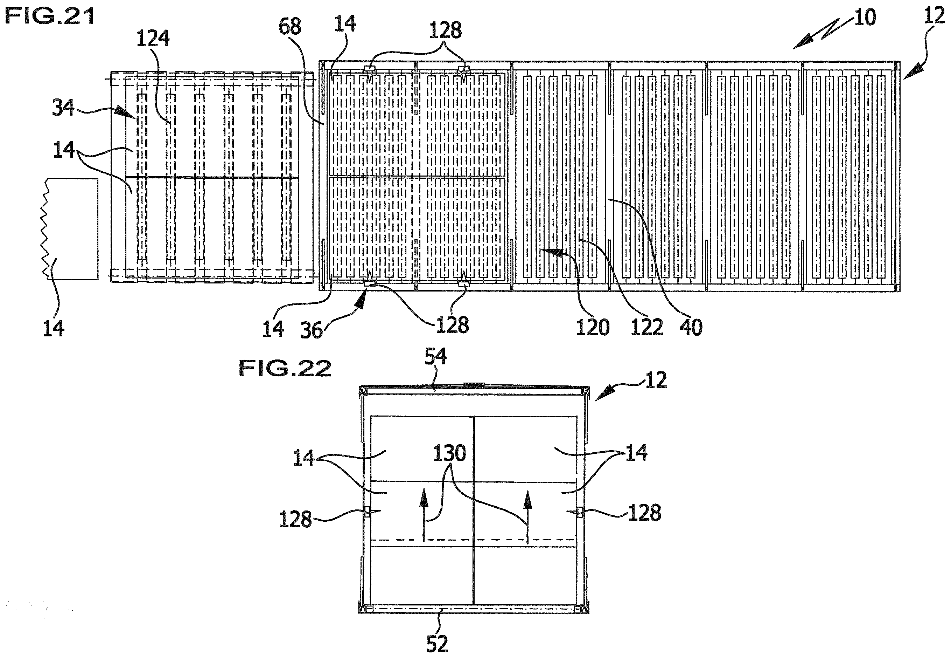

Im Anschluss daran können die Hubelemente 128 an den neu zugeführten Ballen 14 angreifen und die nunmehr vier Ballen 14 anheben. Über die Verschiebeeinrichtung 34 werden zwei weitere Ballen 14 vor der Einführöffnung 68 positioniert. Die zwei weiteren Ballen 14 werden unter die vier angehobenen Ballen 14 geschoben (Figuren 21 und 22).

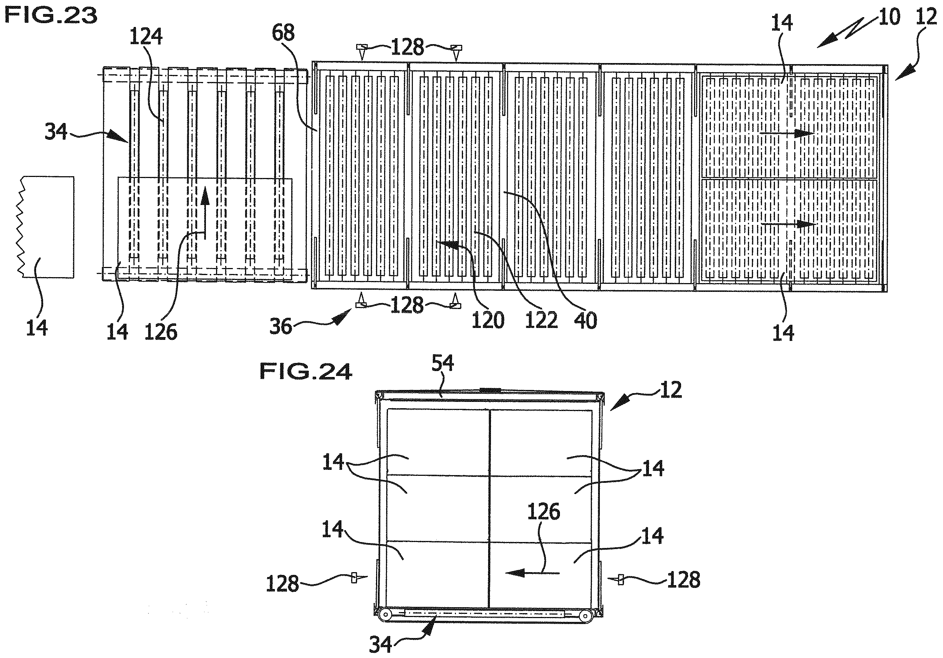

Das so gebildete Ensemble aus insgesamt sechs Ballen 14 wird über die Transportrollen 122 an das Ende des Aufnahmeraums 40 geschoben, und der vorstehend beschriebene Vorgang wiederholt sich (Figuren 23 und 24).

Im vorliegenden Fall sind die Ballen 14 so bemessen, dass im Transportzustand in Längsrichtung drei, in Querrichtung zwei und in Höhenrichtung drei Ballen 14 formschlüssig im Aufnahmeraum 40 angeordnet sind und dadurch die Transportkapazität der Aufnahmevorrichtung 12 mit Abmessungen eines 20-Fuß-Containers gemäß ISO Norm 668 bestmöglich ausgenutzt werden können.

### Bezugszeichenliste:

- 10: Aufnahmesystem
- 12: Aufnahmevorrichtung
- 14: Ballen
- 16: Fahrzeug
- 18: Fahrantrieb
- 20: Rad
- 22: Nutzfläche
- 24: Trageinrichtung
- 26: Verriegelungselement
- 28: Verbindungselement
- 30: Sammeleinrichtung
- 32: Transportbahn
- 34: Verschiebeeinrichtung
- 36: Hubeinrichtung
- 38: Steuereinrichtung
- 40: Aufnahmeraum
- 42: erste Raumrichtung
- 44: zweite Raumrichtung
- 46: dritte Raumrichtung
- 48: erstes Seitenteil
- 50: zweites Seitenteil
- 52: Bodenteil
- 54: Deckelteil
- 56: Gitterrost
- 58: Längsprofil
- 60: Querprofil
- 62: Eingriffsöffnung
- 64: Abdeckelement
- 66: Verbindungseinheit
- 67: Eingriffsöffnung
- 68: Einführöffnung
- 70: Zugelement
- 72: Seil
- 74: Bevorratungseinrichtung
- 76: Trommel
- 78: Spanneinrichtung
- 80: Achse
- 82: Antriebseinrichtung
- 84: Umlenkelement
- 86: Welle
- 88: Führungselement
- 90: Leiste
- 92: Schwenkelement
- 94: Halteteil
- 96: Schwenkachse
- 98: freies Ende
- 100: Ausnehmung
- 102: Rückstellelement
- 104: Torsionsfeder
- 106: Stützeinrichtung
- 108: Hubeinrichtung
- 110: Trommel
- 112: Achse
- 114: Umlenkelement
- 116: Welle
- 118: Achse
- 120: Transporteinrichtung
- 122: Transportrolle
- 124: Transportbahn
- 126: Pfeil
- 128: Hubelement
- 130: Pfeil

## Patentansprüche

1. Aufnahmevorrichtung für Transportzwecke für durch Kompression eines insbesondere langstängeligen Pflanzengutes gebildete Ballen (14), umfassend ein erstes Seitenteil (48), ein relativ zu diesem in einer ersten Raumrichtung (42) beabstandetes zweites Seitenteil (50), und Verbindungseinheiten (66) zum Verbinden der Seitenteile (48, 50) entlang der ersten Raumrichtung (42), wobei die Seitenteile (48, 50) ausgebildet sind, relativ zueinander einen Transportzustand einzunehmen, in dem ein Aufnahmeraum (40) zwischen den Seitenteilen (48, 50) definiert ist und Ballen (14) für Transportzwecke zwischen den Seitenteilen (48, 50) im Aufnahmeraum (50) positioniert sind, und einen Befüllzustand einzunehmen, in dem die Seitenteile (48, 50) relativ zueinander in der ersten Raumrichtung (42) einen größeren Abstand aufweisen als im Transportzustand und in dem die Ballen (14) entlang einer zweiten Raumrichtung (44) quer zur ersten Raumrichtung über eine zwischen den Seitenteilen (48, 50) angeordnete Einführöffnung (68) in den Aufnahmeraum (40) einführbar sind, wobei die Aufnahmevorrichtung (12) eine Spanneinrichtung (78) umfasst oder ausbildet, unter deren Wirkung in einem Spannzustand das erste Seitenteil (48) und das zweite Seitenteil (50) im Transportzustand relativ zueinander verspannt sind, wobei die Spanneinrichtung (78) in einen Freigabezustand überführbar ist, in dem die Seitenteile (48, 50) zur Einnahme des Befüllzustandes relativ zueinander bewegbar sind, und wobei das erste Seitenteil (48) und/oder das zweite Seitenteil (50) Verriegelungselemente (26, 28) zum Fixieren der Aufnahmeeinrichtung (12) an einer Trageinrichtung (24) und/oder zum Fixieren an einer gleichartig ausgestalteten Aufnahmeeinrichtung (12) umfasst.

2. Aufnahmevorrichtung nach Anspruch 1, **dadurch gekennzeichnet, dass** zumindest eines der Folgenden zutrifft:
- mehrere Verbindungseinheiten (66) sind vorgesehen, zwischen denen der Aufnahmeraum (40) angeordnet ist und die entlang einer dritten Raumrichtung (46) voneinander beabstandet sind, die quer zur ersten Raumrichtung (42) ausgerichtet ist, und jeweils am ersten Seitenteil (48) und am zweiten Seitenteil (50) angreifen;
- eine Mehrzahl von in der zweiten Raumrichtung (44) voneinander beabstandeten Verbindungseinheiten (66) ist vorgesehen, zwischen denen jeweils eine Eingriffsöffnung (67) in den Aufnahmeraum (40) gebildet ist, und/oder in der dritten Raumrichtung (46) ist endseitig an der Aufnahmevorrichtung (12) jeweils eine Verbindungseinheit (66) angeordnet;
wobei die dritte Raumrichtung (46) vorzugsweise quer zur zweiten Raumrichtung (64) ausgerichtet ist.

3. Aufnahmevorrichtung nach einem der voranstehenden Ansprüche, **dadurch gekennzeichnet, dass** zumindest eines der Folgenden zutrifft:
- die Einführöffnung (68) ist an einer Endseite der Aufnahmevorrichtung (12) zwischen den Seitenteilen (48, 50) und/oder zwischen den Verbindungseinheiten (66) gebildet;
- die Aufnahmevorrichtung (12) ist an der Einführöffnung (68) im Transportzustand offen;
- die Aufnahmevorrichtung (12) der Einführöffnung (68) ist in Bezug auf die zweite Raumrichtung (44) gegenüberliegend offen;
- die Seitenteile (48, 50) sind im Befüllzustand miteinander verbunden , wobei die Verbindungseinheiten (66) längenveränderlich ausgestaltet sind, um das Überführen der Seitenteile (48, 50) vom Transportzustand in den Befüllzustand und umgekehrt zu ermöglichen.

4. Aufnahmevorrichtung nach einem der voranstehenden Ansprüche, **dadurch gekennzeichnet, dass** das erste Seitenteil (48) ein Bodenteil (52) der Aufnahmevorrichtung (12) ist und dass das zweite Seitenteil (50) ein Deckelteil (54) der Aufnahmevorrichtung (12) ist, wobei vorzugsweise zumindest eines der Folgenden zutrifft:
- das Deckelteil (54) umfasst ein plattenförmiges Abdeckelement (64) oder bildet ein solches aus, das den Aufnahmeraum (40) zumindest teilweise und vorzugsweise vollständig überdeckt;
- im Bodenteil (52) sind Eingriffsöffnungen (62) für eine Transporteinrichtung (120) zum Eingreifen in den Aufnahmeraum (40) gebildet.

5. Aufnahmevorrichtung nach einem der voranstehenden Ansprüche, **dadurch gekennzeichnet, dass** die Verbindungseinheiten (66) in einer Höhenrichtung der Aufnahmevorrichtung (12) verlaufen oder ausgerichtet sind und/oder dass das erste Seitenteil (48) und/oder das zweite Seitenteil (50) als Gitterrost (56) ausgebildet ist oder einen solchen umfasst.

6. Aufnahmevorrichtung nach einem der voranstehenden Ansprüche, **dadurch gekennzeichnet, dass** zumindest eines der Folgenden zutrifft:
- die Aufnahmevorrichtung (12) ist als vom Befüllzustand in den Transportzustand in der ersten Raumrichtung (42) aufweitbarer Rahmen ausgebildet oder umfasst einen solchen Rahmen;
- die Aufnahmevorrichtung (12) ist zwischen den Seitenteilen (48, 50) frei von Seitenwänden;
- die Aufnahmevorrichtung (12) ist im Aufnahmeraum (40) frei von Zwischenböden und/oder frei von Zwischenwänden;
- die Ballen (14) sind im Transportzustand von den Seitenteilen (48, 50) gehalten, und die Aufnahmevorrichtung (12) ist frei von einer gesonderten Ladungssicherung für die Ballen (14).

7. Aufnahmevorrichtung nach einem der voranstehenden Ansprüche, **dadurch gekennzeichnet, dass** die Verbindungseinheiten (66) jeweils ein Zugelement (70) umfassen, das am ersten Seitenteil (48) und am zweiten Seitenteil (50) angreift, dass die Aufnahmevorrichtung (12) mindestens eine Spanneinrichtung (78) zum Spannen des jeweiligen Zugelementes (70) umfasst und dass das erste Seitenteil (48) und das zweite Seitenteil (50) relativ zueinander unter einer Spannwirkung des Zugelementes (70) gegeneinander verspannbar sind.

8. Aufnahmevorrichtung nach Anspruch 7, **dadurch gekennzeichnet, dass** zumindest eines der Folgenden zutrifft:
- das Zugelement (70) ist ein Seil (72) oder ein Gurt, insbesondere ein Stahlseil;
- das Zugelement (70) ist mit einem der Seitenteile (48, 50) fest verbunden;
- mindestens eine Bevorratungseinrichtung (74), insbesondere eine Trommel (76, 110), für das Zugelement (70) ist vorgesehen, wobei das Zugelement (70) durch Beaufschlagen der Bevorratungseinrichtung (74) spannbar oder entspannbar ist;
- die jeweilige Verbindungseinheit (66) umfasst an zumindest einem der Seitenteile (48, 50) und vorzugsweise an beiden Seitenteilen (48, 50) ein Führungselement (88), entlang dem das Zugelement (70) abschnittsweise geführt ist.

9. Aufnahmevorrichtung nach Anspruch 8, **dadurch gekennzeichnet, dass** zwei oder mehr Zugelementen (70) mehrerer Verbindungseinheiten (66) eine gemeinsame Bevorratungseinrichtung (74) zugeordnet ist und/oder dass eine Antriebseinrichtung (82) für die mindestens eine Bevorratungseinrichtung (74) vorgesehen ist und/oder dass ein Spannorgan vorgesehen ist, unter dessen Wirkung das Zugelement (70) auf der Bevorratungseinrichtung aufwickelbar ist.

10. Aufnahmevorrichtung nach Anspruch 8 oder 9, **dadurch gekennzeichnet, dass** zumindest eines der Folgenden zutrifft:
- das Führungselement (88) ist an dem Seitenteil (48, 50) angelenkt und relativ zu diesem um eine vorzugsweise in der zweiten Raumrichtung (44) verlaufende Schwenkachse (96) schwenkbar;
- das Führungselement (88) ist stabförmig oder leistenförmig gebildet, wobei das Zugelement (70) vorzugsweise am Führungselement (88) anliegt, oder das Führungselement (88) ist hülsenförmig , wobei das Zugelement (70) durch das Führungselement (88) hindurchgeführt ist;
- das Führungselement (88) ist von einer ausgeklappten Stellung in eine eingeklappte Stellung überführbar, wobei ein freies Ende (98) des Führungselementes (88) in der ausgeklappten Stellung weiter vom Seitenteil (48, 50) entfernt ist als in der eingeklappten Stellung, wobei vorzugsweise das Führungselement (88) in der eingeklappten Stellung in einer vom Seitenteil (48, 50) definierten Ebene angeordnet ist und/oder am Seitenteil (48, 50) anlegbar ist;
- die Verbindungseinheit (66) umfasst ein Rückstellelement (102), das das Führungselement (88) mit einer auf das Seitenteil (48, 50) gerichteten Kraft beaufschlagt und entgegen dessen Wirkung das Führungselement (88) durch Zug am Zugelement (70) relativ zum Seitenteil (48, 50) verschwenkbar ist, wobei insbesondere das Rückstellelement (102) eine Torsionsfeder (104) ist, die am Seitenteil (48, 50) und am Führungselement (88) angreift und ein die Schwenkachse (96) definierendes Schwenkelement (92) umgibt.

11. Aufnahmevorrichtung nach einem der voranstehenden Ansprüche, **dadurch gekennzeichnet, dass** die Seitenteile (48, 50) relativ zueinander vom Transportzustand in einen Bevorratungszustand überführbar sind, in dem der Abstand der Seitenteile (48, 50) voneinander entlang der ersten Raumrichtung (42) kleiner ist als im Transportzustand, wobei vorzugsweise die Seitenteile (48, 50) im Bevorratungszustand aneinander anlegbar sind und/oder die Aufnahmevorrichtung (12) zusammengeklappt und flachgelegt bevorratbar ist.

12. Aufnahmevorrichtung nach einem der voranstehenden Ansprüche, **dadurch gekennzeichnet, dass** zumindest eines der Folgenden zutrifft:
- eine Mehrzahl von Aufnahmevorrichtungen (12) ist übereinanderstapelbar;
- die Aufnahmevorrichtung (12) ist zumindest im Transportzustand der Seitenteile (48, 50) quaderförmig ausgestaltet;
- der Aufnahmeraum (40) weist eine Länge auf, die ungefähr einem ganzzahligen Vielfachen einer Länge des Ballens (14) entspricht;
- der Aufnahmeraum (40) weist eine Breite auf, die ungefähr einem ganzzahligen Vielfachen einer Länge des Ballens (14) entspricht;
- der Aufnahmeraum (40) weist eine Höhe auf, die ungefähr einem ganzzahligen Vielfachen einer Länge des Ballens (14) entspricht;
- die Aufnahmevorrichtung (12) weist im Transportzustand der Seitenteile (48, 50) Abmessungen eines 20-Fuß-Containers oder eines 40-Fuß-Containers der Norm ISO 668 auf.

13. Aufnahmesystem für durch Kompression eines insbesondere langstängeligen Pflanzengutes gebildete Ballen (14), umfassend eine Trageinrichtung (24) und mindestens eine Aufnahmevorrichtung (12) nach einem der voranstehenden Ansprüche, die lösbar auf der Trageinrichtung (24) aufstellbar ist.

14. Aufnahmesystem nach Anspruch 13, **dadurch gekennzeichnet, dass** zumindest eines der Folgenden zutrifft:
- an der Trageinrichtung (24) und am ersten Seitenteil (48) sind korrespondierende Verriegelungselemente (26) angeordnet, zum lösbaren Verriegeln des Seitenteils (48) an der Trageinrichtung (24);
- an der Trageinrichtung (24) ist eine Transporteinrichtung (120) angeordnet, die in im Bodenteil (52) gebildete Eingriffsöffnungen (62) eingreift, zum Transport von Ballen (14) im Aufnahmeraum (40) in der zweiten Raumrichtung (44), wobei die Transporteinrichtung (120) insbesondere ein Transportband oder Transportrollen (112) umfasst;
- an der Trageinrichtung (24) ist der Einführöffnung (68) vorgelagert eine Verschiebeeinrichtung (34) für Ballen (14) angeordnet, zum Verschieben der Ballen (14) in der dritten Raumrichtung (46);
- das Aufnahmesystem (10) umfasst eine Hubeinrichtung (36) für Ballen (14), mit der mindestens ein Ballen (14) anhebbar und auf einen darunter positionierten oder positionierbaren Ballen (14) auflegbar ist.

15. Aufnahmesystem nach Anspruch 14, **dadurch gekennzeichnet, dass** die Hubeinrichtung (36) in der zweiten Raumrichtung (44) hinter der Einführöffnung (68) positioniert ist, insbesondere bezogen auf die zweite Raumrichtung (44) unmittelbar seitlich neben der Einführöffnung (68), und/oder dass die Hubeinrichtung (36) Hubelemente (128) umfasst, die von einander abgewandten Seiten der Aufnahmevorrichtung (12) in der dritten Raumrichtung (46) in den Aufnahmeraum (40) eingreifen können.

16. Aufnahmesystem nach einem der Ansprüche 13 bis 15, **dadurch gekennzeichnet, dass** zumindest eines der Folgenden zutrifft:
- das Aufnahmesystem (10) umfasst eine Sammeleinrichtung (30) zum Einsammeln der Ballen (14) von einer Bodenfläche (22);
- das Aufnahmesystem (10) umfasst ein Fahrzeug (16) oder bildet ein Fahrzeug (16) aus, wobei insbsondere das Fahrzeug (16) einen Fahrantrieb (18) umfasst und/oder selbstfahrend und selbstlenkend ausgestaltet ist.

## Claims

1. Picking-up device for transport purposes for bales (14) formed by compression of an, in particular, long-stemmed plant material, comprising a first side part (48), a second side part (50) spaced apart relative thereto in a first spatial direction (42), and connecting units (66) for connecting the side parts (48, 50) along the first spatial direction (42), wherein the side parts (48, 50) are designed to assume a transport state relative to one another in which a receiving space (40) is defined between the side parts (48, 50) and bales (14) are positioned, for transport purposes, between the side parts (48, 50) in the receiving space (50), and to assume a filling state in which the side parts (48, 50) are at a greater distance relative to one another in the first spatial direction (42) than in the transport state and in which the bales (14) are insertable into the receiving space (40) along a second spatial direction (44), transverse to the first spatial direction, via an insertion opening (68) arranged between the side parts (48, 50), wherein the picking-up device (12) comprises or forms a clamping device (78), under the action of which, in a clamped state, the first side part (48) and the second side part (50) are clamped relative to each other in a clamping state, wherein the clamping device (78) can be transferred to a release state in which the side parts (48, 50) are movable relative to each other in order to assume the filling state, and wherein the first side part (48) and/or the second side part (50) comprise locking elements (26, 28) for fixing the picking-up device (12) to a support device (24) and/or for fixing it to a similarly designed picking-up device (12).

2. Picking-up device in accordance with claim 1, **characterized in that** at least one of the following applies:
- a plurality of connecting units (66) is provided, between which the receiving space (40) is arranged and which are spaced apart from each other along a third spatial direction (46) that is oriented transversely to the first spatial direction (42) and each engage with the first side part (48) and the second side part (50);
- a plurality of connecting units (66) spaced apart from each other in the second spatial direction (44) is provided, between which an engagement opening (67) into the receiving space (40) is formed in each case, and/or a connecting unit (66) is arranged at each end of the picking-up device (12) in the third spatial direction (46);
wherein preferably the third spatial direction (46) is oriented transverse to the second spatial direction (64).

3. Picking-up device in accordance with any one of the preceding claims, **characterized in that** at least one of the following applies:
- the insertion opening (68) is formed on an end side of the picking-up device (12) between the side parts (48, 50) and/or between the connection units (66);
- the picking-up device (12) is open at the insertion opening (68) in the transport state;
- the picking-up device (12) is open opposite the insertion opening (68), in relation to the second spatial direction (44);
- the side parts (48, 50) are interconnected in the filling state, and **in that** the connection units (66) are designed to be variable in length in order to enable the transfer of the side parts (48, 50) from the transport state to the filling state and vice versa.

4. Picking-up device in accordance with any one of the preceding claims, **characterized in that** the first side part (48) is a base part (52) of the picking-up device (12), and **in that** the second side part (50) is a cover part (54) of the picking-up device (12), whereby preferably at least one of the following applies:
- the cover part (54) comprises or forms a plate-shaped cover element (64) which covers the receiving space (40) at least in part, and preferably completely;
- engagement openings (62) for a transport device (120) are formed in the base part (52) for engagement in the receiving space (40).

5. Picking-up device in accordance with any one of the preceding claims, **characterized in that** the connection units (66) extend or are oriented in a height direction of the picking-up device (12) and/or the first side part (48) and/or the second side part (50) is formed as or comprises a grating (56).

6. Picking-up device in accordance with any one of the preceding claims, **characterized in that** at least one of the following applies:
- the picking-up device (12) is designed as a frame which is expandable from the filling state into the transport state in the first spatial direction (42), or comprises such a frame;
- the picking-up device (12) is free of side walls between the side parts (48, 50);
- the picking-up device (12) is free of intermediate floors and/or free of intermediate walls in the receiving space (40);
- the bales (14) are held, in the transport state, by the side parts (48, 50), and the picking-up device (12) is free of a separate load securing means for the bales (14).

7. Picking-up device in accordance with any one of the preceding claims, **characterized in that** the connection units (66) each comprise a tension element (70) which engages the first side part (48) and the second side part (50), **in that** the picking-up device (12) comprises at least one clamping device (78) for tensioning the respective tension element (70), and **in that** the first side part (48) and the second side part (50), relative to one another, are braceable against one another under a tensioning effect of the tension element (70).

8. Picking-up device in accordance with claim 7, **characterized in that** at least one of the following applies:
- the tension element (70) is a cable (72) or a belt, in particular, a steel cable;
- the tension element (70) is fixedly connected to one of the side parts (48, 50);
- at least one storage device (74), in particular, a drum (76, 110), is provided for the tension element (70), wherein the tension element (70) is tensible or relaxable by acting on the storage device (74);
- the respective connecting unit (66) comprises a guide element (88) on at least one of the side parts (48, 50) and preferably on both side parts (48, 50), along which the tension element (70) is guided in sections.

9. Picking-up device in accordance with claim 8, **characterized in that** two or more tension elements (70) of several connection units (66) are assigned a common storage device (74) and/or that a drive device (82) is provided for the at least one storage device (74), and/or **in that** a clamping member is provided, under the effect of which the tension element (70) is windable on the storage device.

10. Picking-up device in accordance with claim 8 or 9, **characterized in that** at least one of the following applies:
- the guide element (88) is hinged to the side part (48, 50) and is pivotable relative thereto about a pivot axis (96) preferably extending in the second spatial direction (44);
- the guide element (88) can be formed so as to be rod-shaped or strip-shaped, wherein the tension element (70) preferably rests against the guide element (88) or the guide element (88) is sleeve-shaped, and **in that** the tension element (70) is guided through the guide element (88);
- the guide element (88) is transferable from a folded-out position into a folded-in position, wherein a free end (98) of the guide element (88) is farther away from the side part (48, 50) in the folded-out position than in the folded-in position, whereby preferably the guide element (88) is arranged, in the folded-in position, in a plane defined by the side part (48, 50), and/or is placeable against the side part (48, 50);
- the connection unit (66) comprises a restoring element (102) which acts on the guide element (88) with a force directed towards the side part (48, 50) and against the effect of which the guide element (88) is pivotable relative to the side part (48, 50) by pulling on the tension element (70), in particular, **in that** the restoring element (102) is a torsion spring (104) which engages the side part (48, 50) and the guide element (88), and surrounds a pivot element (92) defining the pivot axis (96).

11. Picking-up device in accordance with any one of the preceding claims, **characterized in that** the side parts (48, 50) are transferable relative to one another from the transport state into a storage state in which the distance of the side parts (48, 50) from one another along the first spatial direction (42) is smaller than in the transport state, whereby preferably the side parts (48, 50) are placeable against each other in the storage state and/or the picking-up device (12) is storable folded together and flat.

12. Picking-up device in accordance with any one of the preceding claims, **characterized in that** at least one of the following applies:
- a plurality of picking-up devices (12) is stackable one above the other;
- the picking-up device (12) is cuboid at least in the transport state of the side parts (48, 50);
- the receiving space (40) has a length which corresponds approximately to an integer multiple of a length of the bale (14);
- the receiving space (40) has a width which corresponds approximately to an integer multiple of a length of the bale (14);
- the receiving space (40) has a height which corresponds approximately to an integer multiple of a length of the bale (14);
- in the transport state of the side parts (48, 50), the picking-up device (12) has dimensions of a 20-foot container or a 40-foot container of the ISO 668 standard.

13. Picking-up system for a bale (14) which is formed by compression of an, in particular, long-stemmed plant material, comprising a support device (24) and at least one picking-up device (12) in accordance with any one of the preceding claims, which is releasably placeable on the support device (24).

14. Picking-up system in accordance with claim 13, **characterized in that** at least one of the following applies:
- corresponding locking elements (26) are arranged on the support device (24) and on the first side part (48), for releasable locking of the side part (48) on the support device (24);
- a transport device (120) which engages in engagement openings (62) formed in the base part (52) is arranged on the support device (24) for transporting bales (14) in the receiving space (40) in the second spatial direction (44), wherein the transport device (120) in particular comprises a conveyor belt or transport rollers (112);
- a displacement device (34) for bales (14) is arranged on the support device (24), upstream of the insertion opening (68), for the purpose of moving the bales (14) in the third spatial direction (46);
- the picking-up system (10) comprises a lifting device (36) for bales (14), by means of which at least one bale (14) is raiseable and placeable on a bale (14) positioned or positionable underneath.

15. Picking-up system in accordance with claim 14, **characterized in that** the lifting device (36) is positioned behind the insertion opening (68) in the second spatial direction (44), in particular directly laterally next to the insertion opening (68), in relation to the second spatial direction (44) and/or the lifting device (36) comprises lifting elements (128) which can engage in the receiving space (40) from sides, facing away from one another, of the picking-up device (12) in the third spatial direction (46).

16. Picking-up system in accordance with any one of claims 13 to 15, **characterized in that** at least one of the following applies:
- the picking-up system (10) comprises a collecting device (30) for collecting the bales (14) from a floor surface (22);
- the picking-up system (10) comprises or forms a vehicle (16), wherein in particular the vehicle (16) comprises a traction drive (18), and/or **in that** the vehicle (16) is designed to be self-propelled and self-steering.

## Revendications

1. Dispositif de réception à des fins de transport pour des balles (14) formées par compression d'un produit végétal à tiges particulièrement longues, comprenant une première partie latérale (48), une deuxième partie latérale (50) espacée de celle-ci dans une première direction spatiale (42) et des unités de liaison (66) pour relier les parties latérales (48, 50) le long de la première direction spatiale (42), les parties latérales (48, 50) étant conçues pour prendre l'une par rapport à l'autre un état de transport dans lequel un espace de réception (40) est défini entre les parties latérales (48, 50) et des balles (14) sont positionnées entre les parties latérales (48, 50) dans l'espace de réception (50), et un état de remplissage dans lequel les parties latérales (48, 50) présentent entre elles une distance plus grande dans la première direction spatiale (42) que dans l'état de transport et dans lequel les balles (14) peuvent être introduites dans l'espace de réception (40) le long d'une deuxième direction spatiale (44) transversale à la première direction spatiale via une ouverture d'introduction (68) agencée entre les parties latérales (48, 50), le dispositif de réception (12) comprenant ou formant un dispositif de serrage (78) sous l'effet duquel, dans un état de serrage, la première partie latérale (48) et la deuxième partie latérale (50) sont serrées l'une par rapport à l'autre dans un état de serrage, le dispositif de serrage (78) pouvant être transféré dans un état de libération dans lequel les parties latérales (48, 50) peuvent être déplacées l'une par rapport à l'autre pour prendre l'état de remplissage, et la première partie latérale (48) et/ou la deuxième partie latérale (50) comprenant des éléments de verrouillage (26, 28) pour fixer le dispositif de réception (12) à un dispositif de support (24) et/ou pour le fixer à un dispositif de réception (12) de conception similaire.

2. Dispositif de réception selon la revendication 1, **caractérisé en ce qu'**au moins l'une des conditions suivantes est remplie :
- plusieurs unités de liaison (66) sont prévues, entre lesquelles est agencé l'espace de réception (40) et qui sont espacées les unes des autres le long d'une troisième direction spatiale (46) qui est orientée transversalement à la première direction spatiale (42) et qui s'engagent respectivement sur la première partie latérale (48) et sur la deuxième partie latérale (50) ;
- une pluralité d'unités de liaison (66) espacées les unes des autres dans la deuxième direction spatiale (44) est prévue, entre lesquelles est formée respectivement une ouverture d'engagement (67) dans l'espace de réception (40), et/ou dans la troisième direction spatiale (46), une unité de liaison (66) est agencée respectivement à l'extrémité du dispositif de réception (12) ;
la troisième direction spatiale (46) étant de préférence orientée transversalement à la deuxième direction spatiale (64).

3. Dispositif de réception selon l'une des revendications précédentes, **caractérisé en ce qu'**au moins l'une des conditions suivantes est remplie :
- l'ouverture d'introduction (68) est formée sur un côté d'extrémité du dispositif de réception (12) entre les parties latérales (48, 50) et/ou entre les unités de liaison (66) ;
- le dispositif de réception (12) est ouvert au niveau de l'ouverture d'introduction (68) dans l'état de transport ;
- le dispositif de réception (12) est ouvert de manière opposée de l'ouverture d'introduction (68) par rapport à la deuxième direction spatiale (44) ;
- les parties latérales (48, 50) sont reliées entre elles à l'état de remplissage, les unités de liaison (66) étant conçues de manière à pouvoir varier en longueur afin de permettre le passage des parties latérales (48, 50) de l'état de transport à l'état de remplissage et inversement.

4. Dispositif de réception selon l'une des revendications précédentes, **caractérisé en ce que** la première partie latérale (48) est une partie inférieure (52) du dispositif de réception (12) et **en ce que** la deuxième partie latérale (50) est une partie supérieure (54) du dispositif de réception (12), au moins l'une des conditions suivantes étant de préférence remplie :
- la partie supérieure (54) comprend ou forme un élément de recouvrement (64) en forme de plaque qui recouvre au moins partiellement et de préférence complètement l'espace de réception (40) ;
- des ouvertures d'engagement (62) pour un dispositif de transport (120) sont formées dans la partie inférieure (52) afin de s'engager dans l'espace de réception (40).

5. Dispositif de réception selon l'une des revendications précédentes, **caractérisé en ce que** les unités de liaison (66) s'étendent ou sont alignées dans le sens de la hauteur du dispositif de réception (12) et/ou **en ce que** la première partie latérale (48) et/ou la deuxième partie latérale (50) est conçue comme une grille (56) ou comprend une telle grille.

6. Dispositif de réception selon l'une des revendications précédentes, **caractérisé en ce qu'**au moins l'une des conditions suivantes est remplie :
- le dispositif de réception (12) est conçu comme un cadre pouvant être élargi dans la première direction spatiale (42) de l'état de remplissage à l'état de transport ou comprend un tel cadre ;
- le dispositif de réception (12) est dépourvu de parois latérales entre les parties latérales (48, 50) ;
- le dispositif de réception (12) est dépourvu de fonds intermédiaires et/ou de parois intermédiaires dans l'espace de réception (40) ;
- les balles (14) sont maintenues par les parties latérales (48, 50) à l'état de transport, et le dispositif de réception (12) est dépourvu de dispositif de sécurisation de chargement séparé pour les balles (14).

7. Dispositif de réception selon l'une des revendications précédentes, **caractérisé en ce que** les unités de liaison (66) comprennent chacune un élément de traction (70) qui s'engage sur la première partie latérale (48) et sur la deuxième partie latérale (50), **en ce que** le dispositif de réception (12) comprend au moins un dispositif de serrage (78) pour serrer l'élément de traction (70) respectif, et **en ce que** la première partie latérale (48) et la deuxième partie latérale (50) peuvent être serrées l'une contre l'autre sous l'effet de serrage de l'élément de traction (70).

8. Dispositif de réception selon la revendication 7, **caractérisé en ce qu'**au moins l'une des conditions suivantes est remplie :
- l'élément de traction (70) est un câble (72) ou une sangle, en particulier un câble en acier ;
- l'élément de traction (70) est relié de manière fixe à l'une des parties latérales (48, 50) ;
- au moins un dispositif de stockage (74), en particulier un tambour (76, 110), est prévu pour l'élément de traction (70), l'élément de traction (70) pouvant être tendu ou détendu en agissant sur le dispositif de stockage (74) ;
- chaque unité de liaison (66) comprend, sur au moins l'une des parties latérales (48, 50) et de préférence sur les deux parties latérales (48, 50), un élément de guidage (88) le long duquel l'élément de traction (70) est guidé par sections.

9. Dispositif de réception selon la revendication 8, **caractérisé en ce qu'**un dispositif de stockage commun (74) est associé à deux ou plusieurs éléments de traction (70) de plusieurs unités de liaison (66) et/ou **en ce qu'**un dispositif d'entraînement (82) est prévu pour l'au moins un dispositif de stockage (74) et/ou qu'un organe de tension est prévu, sous l'action duquel l'élément de traction (70) peut être enroulé sur le dispositif de stockage.

10. Dispositif de réception selon la revendication 8 ou 9, **caractérisé en ce qu'**au moins l'une des conditions suivantes est remplie :
- l'élément de guidage (88) est articulé sur la partie latérale (48, 50) et peut pivoter par rapport à celle-ci autour d'un axe de pivotement (96) s'étendant de préférence dans la deuxième direction spatiale (44) ;
- l'élément de guidage (88) est en forme de tige ou de barre, l'élément de traction (70) reposant de préférence contre l'élément de guidage (88), ou l'élément de guidage (88) est en forme de manchon, l'élément de traction (70) passant à travers l'élément de guidage (88) ;
- l'élément de guidage (88) peut être transféré d'une position dépliée à une position repliée, une extrémité libre (98) de l'élément de guidage (88) étant plus éloignée de la partie latérale (48, 50) dans la position dépliée que dans la position repliée, l'élément de guidage (88) étant de préférence agencé dans la position repliée dans un plan défini par la partie latérale (48, 50) et/ou pouvant être appliqué contre la partie latérale (48, 50) ;
- l'unité de liaison (66) comprend un élément de rappel (102) qui applique une force dirigée vers la partie latérale (48, 50) sur l'élément de guidage (88) et, à l'encontre de son action, fait pivoter l'élément de guidage (88) par traction sur l'élément de traction (70) par rapport à la partie latérale (48, 50), l'élément de rappel (102) étant en particulier un ressort de torsion (104) qui s'engage sur la partie latérale (48, 50) et sur l'élément de guidage (88) et entoure un élément pivotant (92) définissant l'axe de pivotement (96).

11. Dispositif de réception selon l'une des revendications précédentes, **caractérisé en ce que** les parties latérales (48, 50) peuvent être transférées l'une par rapport à l'autre de l'état de transport à un état de stockage dans lequel la distance entre les parties latérales (48, 50) l'une par rapport à l'autre le long de la première direction spatiale (42) est plus petite que dans l'état de transport, les parties latérales (48, 50) pouvant de préférence être placées les unes contre les autres dans l'état de stockage et/ou le dispositif de réception (12) pouvant être stocké replié et à plat.

12. Dispositif de réception selon l'une des revendications précédentes, **caractérisé en ce qu'**au moins l'une des conditions suivantes est remplie :
- une pluralité de dispositifs de réception (12) peuvent être empilés les uns sur les autres ;
- le dispositif de réception (12) est de forme parallélépipédique au moins dans l'état de transport des parties latérales (48, 50) ;
- l'espace de réception (40) présente une longueur qui correspond approximativement à un multiple entier d'une longueur de la balle (14) ;
- l'espace de réception (40) présente une largeur qui correspond approximativement à un multiple entier d'une longueur de la balle (14) ;
- l'espace de réception (40) présente une hauteur qui correspond approximativement à un multiple entier d'une longueur de la balle (14) ;
- le dispositif de réception (12) présente, à l'état de transport des parties latérales (48, 50), les dimensions d'un conteneur de 20 pieds ou d'un conteneur de 40 pieds selon la norme ISO 668.

13. Système de réception pour des balles (14) formées par compression d'une matière végétale à tiges longues en particulier, comprenant un dispositif de support (24) et au moins un dispositif de réception (12) selon l'une des revendications précédentes, qui peut être monté de manière amovible sur le dispositif de support (24).

14. Système de réception selon la revendication 13, **caractérisé en ce qu'**au moins l'une des conditions suivantes est remplie :
- des éléments de verrouillage correspondants (26) sont agencés sur le dispositif de support (24) et sur la première partie latérale (48) pour verrouiller de manière amovible la partie latérale (48) sur le dispositif de support (24) ;
- un dispositif de transport (120) est agencé sur le dispositif de support (24) et s'engage dans des ouvertures d'engagement (62) formées dans la partie inférieure (52) pour transporter des balles (14) dans l'espace de réception (40) dans la deuxième direction spatiale (44), le dispositif de transport (120) comprenant en particulier une bande transporteuse ou des rouleaux de transport (112) ;
- un dispositif de déplacement (34) pour les balles (14) est agencé sur le dispositif de support (24) en amont de l'ouverture d'introduction (68) pour déplacer les balles (14) dans la troisième direction spatiale (46) ;
- le système de réception (10) comprend un dispositif de levage (36) pour balles (14), avec lequel au moins une balle (14) peut être soulevée et déposée sur une balle (14) positionnée ou pouvant être positionnée en dessous.

15. Système de réception selon la revendication 14, **caractérisé en ce que** le dispositif de levage (36) est positionné dans la deuxième direction spatiale (44) derrière l'ouverture d'introduction (68), en particulier par rapport à la deuxième direction spatiale (44) immédiatement à côté de l'ouverture d'introduction (68), et/ou que le dispositif de levage (36) comprend des éléments de levage (128) qui peuvent s'engager dans l'espace de réception (40) dans la troisième direction spatiale (46) à partir de côtés opposés du dispositif de réception (12).

16. Système de réception selon l'une des revendications 13 à 15, **caractérisé en ce qu'**au moins l'une des conditions suivantes s'applique :
- le système de réception (10) comprend un dispositif de collecte (30) pour collecter les balles (14) à partir d'une surface au sol (22) ;
- le système de réception (10) comprend un véhicule (16) ou forme un véhicule (16), le véhicule (16) comprenant en particulier un entraînement (18) et/ou étant conçu pour être automoteur et autoguidé.
